(19) Europäisches Patentamt
European Patent Office
Office européen des brevets

(11) Publication number: **0 064 850 A2**

# (12) EUROPEAN PATENT APPLICATION

(21) Application number: 82302251.2

(22) Date of filing: 30.04.82

(51) Int. Cl.[3]: **H 01 G 9/20**
**H 01 M 14/00**

(30) Priority: 04.05.81 US 259941
04.05.81 US 259944
04.05.81 US 259945
04.05.81 US 259917
04.05.81 US 259973

(43) Date of publication of application:
17.11.82 Bulletin 82/46

(84) Designated Contracting States:
DE FR GB IT NL SE

(71) Applicant: DIAMOND SHAMROCK CORPORATION
717 North Harwood Street
Dallas Texas 75201(US)

(72) Inventor: Gordon, Arnold Z.
5139 Mayview
Lyndhurst Ohio 44124(US)

(72) Inventor: Hardee, Kenneth L.
15818 Georgia Road
Middlefield Ohio 44062(US)

(72) Inventor Gilligan, Thomas J. III
11740 Jason Avenue
Painesville Ohio 44077(US)

(72) Inventor: Kalynchuk, Daniel G.
2431 Saybrook Road
University Heights Ohio 44118(US)

(74) Representative: Oliver, Roy Edward et al,
POLLAK,MERCER & TENCH High Holborn House 52-54
High Holborn
London WC1V 6RY(GB)

## (54) Solar energy converter.

(57) A photoactive semiconductor mixed metal oxide material comprises a true solid/solid solution of a specific composition of elemental metals and/or metal non-oxide compounds which are soluble or can be made soluble and which are then fired to produce a true solid solid solution of metal oxide compounds providing an effective band gap and or optical response optimally matched to the part of the energy spectrum desired for a particular utilization. A method of producing the true solid solid solution photoactive semiconductor mixed metal oxide material is also disclosed, together with photoelectrochemical semiconductor cells for providing electricity, fuel, chemicals and or chemical energy, preferably solar cells, which utilize the photoactive true solid solid solution semiconductor mixed metal oxide material in a bulk or film electrode Useful electrolytes include liquid, sol, gel systems The cells can serve for the simultaneous conversion of light energy into electrical energy and thermal energy utilizing a liquid-junction semiconductor photocell (PEC) utilizing a novel photoactive true solid solid solution semiconductor mixed metal oxide material electrode so as to adjust the band gap and or optical response properties of the electrode to be more closely attuned to the major output portion of the solar spectrum as well as lowering the cost of production and being environmentally solvent.

Further disclosed are photoactive n-type and p-type semiconductor film electrodes utilizable in photo-assisted reactions in photoelectrochemical cells and or photovoltaic cells utilizing the true solid solid solutions described above. The photoactive semiconductor film electrodes have a film layer (20) of the true solid solid solution mixed metal oxide disposed upon a suitable substrate (10) in either one or more coats, the electrode also including some form of electrical connector (30).

Finally, photoelectrochemical cells utilizing solid electrolytes comprising ionomers or polymers solvated with liquid materials capable of redox chemistry are also disclosed

./...

EP 0 064 850 A2



BAD ORIGINAL

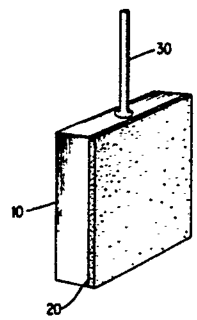

FIG. 7

# SOLAR ENERGY CONVERTER

## BACKGROUND OF THE INVENTION

This invention relates to photoactive semiconductor mixed metal oxide materials suitable for use as electrodes in electrochemical cells, photoconductors, and in "photoassisted" electrochemical reactions utilizing true solid/solid solutions of diverse metal oxides to produce the photoactive semiconductor mixed metal oxide material. A method of producing said true solid/solid solution type of photoactive semiconductor mixed metal oxide material is also disclosed.

This invention also relates generally to liquid-junction semiconductor devices for use as photocells and in particular to such devices for use as solar cells for producing electrical energy from solar energy. In addition, this invention relates to solar cells wherein both electrical and thermal energy is produced from light energy.

Further, this invention also relates to photoactive semiconductor film electrodes suitable for use in electrochemical cells and in "photoassisted" electrochemical reactions utilizing true solid/solid solutions of diverse mixed metal oxides.

Finally, this invention relates to solid electrolytes for use in photoelectrochemical cells and particularly to the use of solid electrolytes in solar cells.

Concern over the continued availability as well as the continually escalating cost of fossil fuel energy sources has sustained high interest in the development of

alternative energy sources, including solar power, which can be used to generate electricity. The devices most often considered for conversion of solar power into electricity are semiconductor devices, commonly called solar cells, which collect light, and generate photocurrent, in approximate proportion to the area of the photosensitive junction. This photosensitive junction must, therefore, be large to generate a useful current. The cost of manufacturing such devices depends in part on the area of the photosensitive junction and is presently too high to permit commercial exploitation of solar cells for other than limited and specialized applications.

There has been considerable recent interest in the application of photoactive semiconductor electrodes to the electrolysis of water and to the direct conversion of solar energy to electrical, fuel, chemicals and/or chemical energy. The uses of such electrodes have been generalized as reduction-oxidation reactions in addition to the electrolysis of water. Chemical reactions resulting from photoactive semiconductor electrodes can be carried out at potentials much lower than otherwise required utilizing light as an additional driving force for these reactions. Such processes may be termed "photo-assisted" rather than photocatalyzed reactions. There are, however, two major obstacles which must be overcome in order to make direct conversion of solar energy to viable commercial process both on the industrial level and the consumer level. The first of these two problems is reducing the cost of producing the desired end result, i.e., the electrolysis of water or direct conversion of solar energy to electrical, fuel, chemicals and/or chemical energy. The second problem is producing a system that has a long life in actual use. An acceptable life span is generally thought to be 20 years. Oxides of niobium, tantalum, titanium, and tin tend to answer both the above problems and do exhibit the necessary photochemical response. It has been long known, for example,

that titanium dioxide ($TiO_2$) fills both of the requirements of long life and economical production of electrodes for use in the electrolysis of water or the direct conversion of solar to chemical or electrical energy. However, titanium dioxide by itself has an extremely large (relative to where the energy of the solar spectrum falls) "band gap." The term "band gap" as herein and hereafter used means the minimum amount of energy needed to raise an electron in a valence band to an energy level in a conduction band. This band gap is too large for use with approximately 97% of the available solar energy, i.e., $TiO_2$ absorbs wavelengths that are shorter than about 400 nanometers, and about 97% of the terrestrial solar spectrum has wavelengths that are longer than 400 nanometers. Titanium dixoide does have an additional advantage of being a material which is not toxic to the general environment. Thus, it does not have any of the generally harmful effects to the environment commonly associated with materials having a natural band gap more closely attuned to the solar spectrum such as, for example, cadmium selemide (CdSe) and gallium arsenide (GaAs).

It is known that electrodes fabricated from, for example, single crystals of pure titanium dioxide, doped single crystals of titanium dioxide, or polycrystalline titanium dioxide which may or may not be deposited on an appropriate substrate can be used as photoelectrodes. Titanium dioxide has a band gap which is unacceptably inefficient of about 3.0 eV. This band gap results in a maximum terrestrial power conversion efficiency of only about 1 or 2%.

To form electrically conductive semiconductor material, the titanium dioxide may be typically treated by reduction with hydrogen or reduction in a vacuum. It is theorized that such treatment produces a material with oxygen latices deficiencies in the titanium dioxide crystal, with these latice defect sites contributing to

the semiconductor properties. This partially reduced material can be characterized by the general formula $TiO_{(2-x)}$, where x takes on a value of between 0 and 1. Because of the great possibilities which these electrodes have for conversion of solar energy to electrical or chemical energy, a number of studies have been directed to methods of fabricating electrodes which make such conversions more efficient. In previously described uses of n-type titanium dioxide semiconductor electrodes, it has generally been the practice to use electrodes formed from single crystals of $TiO_2$ or a reduced polycrystalline $TiO_2$.

The technique of producing single crystal, photoactive $TiO_2$ electrodes is described, for example, by S. N. Frank et al in "Semiconductor Electrodes II, Electrochemistry at N-type $TiO_2$ Electrodes in Acetonitrile Solutions," J. Am. Chem. Soc. 97:7427 (1975). Polycrystalline titanium dioxide electrodes produced by chemical vapor deposition techniques are described, for example, by K. L. Hardee et al in "The Chemical Vapor Deposition and Application of Polycrystalline N-type Titanium Dioxide Electrodes of the Photosensitized Electrolysis of Water," J. Electrochem. Soc. 112:739 (1975).

Single crystal $TiO_2$ electrodes or doped single crystal $TiO_2$ electrodes are costly and difficult to produce. On the other hand, polycrystalline electrodes which utilize $TiO_2$ as the photoactive semiconductor material are less difficult and less costly to produce but are still limited in their spectral response to wavelengths of about 400 nanometers and shorter.

Another method of trying to alter the spectral response of the $TiO_2$ electrodes involves making physical mixtures of titanium dioxide and other compounds with optical absorption closer to the desired optimum of the terrestrial solar spectrum, see for example, U.S. Patents 4,181,593 and 4,181,754. Said U.S. patents teach physical

mixtures which are not homogeneous mixtures at the ionic or molecular level. The nonhomogeneous mixtures are limited to titanium dioxide and other metal oxides which have a chemical oxidation state other than +4 which are sintered and placed on a substrate. While this teaching does produce an electrode, it does not produce an electrode which has the necessary efficiency to make it economically feasible in the market place. Additionally, the above-identified U.S. Patent 4,181,593 teaches an optical absorption adjustment of only 70 nanometers at best, i.e., up to about 470 nanometers. This is still far from the optimum wavelength of approximately 800 nanometers. Yet another method used to modify $TiO_2$ has been what is called "dying" of the $TiO_2$ either supported by another substrate or unsupported. These systems use a film layering over the $TiO_2$ of a material, frequently organic, which absorbs solar energy more efficiently than $TiO_2$ alone. These systems, however, are deficient in a number of areas. First, they do not provide the longevity necessary for an economical system in the market place. Secondly, they are not efficient.

A method similar to the "dying" method is that of layering $TiO_2$ with a cover layer of one or more metal oxides which have a band gap more closely attuned to that of the solar spectrum. These systems, however, have all the limitations inherent in the "dying" type systems discussed above.

Considerable work has been done in the recent past on photoelectrochemical cells. One basic type of cell has one electrode which is a photoactive semiconductor while the other consists of metal. This has been referred to as a Schottky-type cell because it theoretically resembles the all solid state equivalent of the same name. In a second type, both electrodes are photoactive semiconductors, the anode consisting of an n-type and the cathode of a p-type semiconductor.

Between the electrodes, a suitable electrolyte is provided. This may, for example, consist of an aqueous solution or a nonaqueous solution. The electrolyte usually includes a solution phase redox-active system. One function of this redox-active solution couple is to eliminate or minimize either anodic oxidation or cathodic reduction of the semiconductor. If this photocorrosion mechanism decomposition is allowed to occur, it can quickly reduce the cell to uselessness.

Numerous workers have reported on such cells which may make use of single crystal or polycrystalline semiconductors. These semiconductors themselves have involved a wide range of narrow band gap and wide band gap materials, the band gap being defined as the minimum amount of energy needed to raise an electron in a valence band to an energy level in a conduction band. Major emphasis has been on narrow band gap materials, i.e., band gaps around 1.4 eV because they can best utilize wavelengths within ordinary sunlight and are in principle capable of efficiently trnasforming solar energy into electricity.

The technology involving such cells with liquid electrolytes has been covered in a U.S. patent to Manassen et al, U.S. Patent 4,064,326. This patent in particular describes a cell utilizing cadmium sulfide, cadmium selenide, cadmium telluride and other semiconductor materials. The patent also discloses various redox couples suitable in principle for the prevention of photoelectrode corrosion or decomposition.

Cells which use nonaqueous solvents as a component of the electrolyte in lieu of aqueous electrolytes are reported upon in a paper by Nakatani, Matsudaira and Tsubomura which appears in the Journal of the Electrochemical Society: Electrochemical Science and Technology, Vol. 125, No. 3, pages 406-409, March, 1978. For any selected system of semiconductors and solvents, a particular redox system must be selected. Such a redox

system or couple introduced to the electrolyte helps insure that a competitive redox reaction takes place to minimize the photodecomposition of the electrodes. It should also be realized that the electrolyte itself is subject to decomposition.

Reference is also made to a paper by H. Gerischer which appears in the Journal Proceedings of the Electrochemical Society of a Symposium on Electrode Materials and Processes for Energy Conversion and Storage, Vol. 77-6, pages 8-29 (1977). This paper discloses at length photoelectrochemical cells utilizing aqueous electrolytes, energy reactions within the cell, as well as redox couples. In this connection, reference is made, for example, to Figure 4 of the paper relating to redox reactions. Figure 7 shows energy correlations between band edges of various semiconductors and some redox systems in aqueous electrolytes.

The subject has been treated mathematically in a paper by A. J. Nozik, entitled "Energetics of Photoelectrolysis" which appears in Proceedings of the Electrochemical Society of a Conference on the Electrochemistry and Physics of Semiconductor Liquid-Junction Solar Cells, Vol. 77-3, pages 272-289 (1977).

A more recent advance in the state of the art of photoelectrochemical cells has been covered in a U.S. patent to Rod et al, U.S. Patent 4,217,402. This patent in particular describes a photoelectrochemical cell system utilizing a gelled electrolyte. Specifically the gelled electrolyte consists of an alkaline aqueous electrolyte in a gelling agent such as silicone dioxide or KNOX® gelatin.

Considerable effort has been devoted to finding ways to reduce the cost of semiconductor solar cell devices. A portion of this effort has been directed, as in U.S. Patent 3,953,876, issued April 27, 1976, to devices in which the semiconductor material is deposited as a polycrystalline thin film on an inexpensive substrate rather than grown by the costly single crystal techniques used in

earlier solar cells. A different approach that has generated enthusiasm is the liquid-junction semiconductor solar cells. The active part of these cells is a junction formed at a semiconductor-liquid interface, the device promises to be less costly to manufacture as relatively costly epitaxy or diffusion procedures required for the single crystal or polycrystalline devices mentioned above are not needed to form the junction.

Four obstacles must be surmounted, however, before such cells can be exploited commercially. First, liquid-junction semiconductors are often not photochemically stable because photoexcitation produces electrons or electron holes at the semiconductor surface which may react with the semiconductor causing corrosion of the semiconductor surface. This corrosion proceeds in a manner that degrades the desired characteristics of the semiconductor surface and is commonly manifested by decay of the photocurrent from the cell with operating time. An example of such a reaction with a CdS electrode, for example, is $CdS(s) + 2H^+ \rightarrow S^0(s) + Cd^{2+}$ (solvated) leading to the formation of a sulfur layer at the junction interface. One approach to solving this problem involves the use of, for example, a polysulfide-sulfide redox couple type of solution. Since the corrosion reaction $CdS(s) + 2H^+ \rightarrow S^0(s) + Cd^{2+}$ (solvated) proceeds at a higher electrode potential than the reaction $S^{2-}$ (solvated) $\rightarrow S^0 + 2e^-$, the sulfur-polysulfide couple consumes the electron holes responsible for the corrosion reaction before the potential for the corrosion reaction is reached. A second approach to resolving this problem is to use a material which has a corrosion reaction potential so high as to in effect be corrosion resistant. Such materials are, for example, certain transition metal oxide compounds. A specific example is titanium dioxide.

Secondly, the cost of single crystal semiconductor electrodes is too high for commercial success. Several approaches have been tried to reduce the cost of single

crystal semiconductor, especially chalcogenide, electrodes. One approach involves the electrolytic co-deposition of the electrode materials, e.g., cadmium and selenium, on an inert substrate. Another approach involves the anodization of a cadmium or bismuth substrate to form a chalcogenide semiconductor. These methods, however, do not produce materials which are cost competitive in the market place.

Thirdly, the band gap of the photoelectrodes must be closely attuned to the major energy portion of the solar spectrum, i.e., approximately 1.4 eV. This band gap is necessary not only to produce a high power per surface area ratio, thereby increasing the output of a given cell, but also to decrease the area of the liquid-solid junction needed and thereby lower the cost of the installation per unit of energy produced.

Finally, the liquid-junction semiconductor photocell needs to be one which is environmentally sound. Thus, while material such as cadmium and selenium may produce potentially useful power outputs when used in solar cells, they are themselves highly toxic materials. Thus, they are not only environmentally harmful in use but also difficult and expensive to manufacture due to the necessary environmental considerations needed in the manufacturing processes of these materials.

The usual semiconductive devices for directly converting electromagnetic energy to electricity are photovoltaic cells "photocells," and common examples of photocells are selenium or gallium semiconductors having P-N junctions. Commonly, an electrical lead is connected on either side of the semiconductor across the P-N junction. Semiconductor photovoltaic cells are very expensive; in consequence, it has often been the practice to gather and concentrate the sunlight reaching a given semiconductor photocell so that extremely large areas of semiconductor material need not be employed as would be necessary without such a gathering system. The common

gathering systems in the past were optical systems wherein lens systems concentrated light and focused the same on a given photovoltaic cell.

However, such a lens system was and is relatively expensive and is not useful in diffused light or on a cloudy day. More recently, however, there has been conceived a different type of collector and concentrator for radiation to be impinged on in a semiconductor photocell. For instance, Weber and Lambe, in Applied Optics, Vol. 15, pages 2299-2300, October, 1976, disclose a system whereby a large area sheet of material, such as a rigid plastic or a glass doped with luminescent material is exposed to solar radiation. The luminescent material ideally has a strong absorption of the sun's rays, especially in the visible region where the solar spectrum peaks, and it emits electromagnetic radiation of a longer wavelength suitable for activating the semiconductor photocell. A large portion of the light emitted from the luminescent material is in effect trapped in the collector with essentially total internal reflection until the light reaches an area where a photocell, such as selenium photocell, is optically coupled to a small area, for instance, an edge of the collector. In this way, the light from the sun is not only converted to more suitable wavelengths for activation of the photocell but is concentrated since the light received by the large area of the collector escapes only in the small area where the photocell is optically connected to the collector.

Another article by Levitt and Weber, appearing in Applied Optics, Vol. 16, 10, pages 2684-2689, October, 1977, should be read with the article first mentioned. Other publications aiding in the understanding of luminescent solar collectors include Goetzberger, Applied Physics, 14, 123-139 (1977). U.S. Patent 4,110,123, issued August, 1978, claiming priority in part based on German Patent Applications 2720115 published November 10, 1977, filed May 6, 1976, and 2628917 published January 12,

1978, filed June 24, 1976, and referred to in the former patent application. German Patent Application 2554226 published June 6, 1977, is of some peripheral interest.

Also numerous patents deal with the conversion of solar energy to different wavelengths by means of luminescent or fluorescent layers and impinging emitted light on a photocell; examples are U.S. Patents 3,426,212, 3,484,606 and 3,912,931. In U.S. Patent 3,912,931, benzene and other aromatic hydrocarbons are said to be "fixed" in layers of a silicone resin superimposed on a photocell.

U.S. Patent 4,186,033, issued January 29, 1980, to Boling et al, discloses a structure for a conversion of solar energy to electricity and heat using a luminescent solar collector and concentrators in conjunction with a photovoltaic cell. The teaching of the above-mentioned reference works in the same general way as the type disclosed in the Goetzberger et al publication, the U.S. Patent 4,110,123, the German Application 2620115, the Weber and Lambe paper and in the Levitt and Weber paper but, in addition, claims an improved structure.

U.S. Patent 4,081,289 shows a scheme for cooling solar cells as they generate electricity but in a very different setting from the above-mentioned patents and articles.

U.S. Patent 4,056,405, issued November 1, 1977, to Varadi, Discloses a solar panel structure which accepts a plurality of individual solar cells and provides a method of cooling these solar cells. Varadi does not disclose a solar cell of any kind, only a housing to protect solar cells from both the environment and from overheating. Varadi does recognize that the heat removed may be utilized and is not just a waste product.

U.S. Patent 4,172,740, issued October 30, 1979, to Campbell, discloses a solar cell and light concentration system wherein a liquid contained in a sphere is used as a lens system for solar cells located substantially in the

center of said sphere. A method of extracting heat from the fluid is also disclosed.

None of these references, however, teach the combination of thermal and electrical production utilizing a photoelectrochemical cell in conjunction with a thermal transfer medium. Additionally, none of these references disclose a system wherein materials are used which are not highly toxic to the environment, i.e., they all discuss the use of the commonly used photovoltaic cells containing elements such as gallium, arsenic, selenium, etc., or disclose a heat transfer system with only generalizations of solar cells without description of any specific solar cells.

While photoelectrochemical cells (PEC) offer an alternative to photovoltaic cells, they too have had the problem of being expensive to produce. Considerable effort has been devoted to finding ways to reduce the cost of semiconductor solar cell devices. Much of this effort has been directed, as in U.S. Patent 3,953,876, issued April 27, 1976, to devices in which the semiconductor material is deposited as a polycrystalline thin film on an inexpensive substrate rather than grown by the costly single crystal techniques used in earlier solar cells. A different approach that has generated enthusiasm is the use of a liquid-junction semiconductor solar cell. The active part of these cells is a junction formed at a semiconductor-liquid interface. Because the junction forms spontaneously at the liquid-solid interface, the device promises to be less costly to manufacture because relatively costly epitaxy or diffusion procedures required for the single crystal or polycrystalline devices mentioned above are not needed to form the junction.

## SUMMARY OF THE INVENTION

It has been discovered that a liquid-junction semiconductor photocell can be produced using an electrode comprising a photoactive true solid/solid solution

semiconductor mixed metal oxide material to adjust the band gap and/or optical properties of the electrode to more closely attune it to the major output portion of the solar spectrum as well as lowering the cost of production and providing a solar cell which is environmentally sound without the need for elaborate and expensive production procedures.

Applicant's approach is to shift the mixed metal oxide materials optical absorption to be more closely attuned to the specific application, for example, the terrestrial solar spectrum, i.e., an optical absorption edge of approximately 1.4 eV. Thus, the mixed metal oxide compounds in the form of true solid/solid solutions produces photoactive semiconductor material suitable for use in photoelectrochemical cells and/or photovoltaic cells, as electrodes, having high efficiency, long life and which are economically suitable for the market place. Electrodes utilizing the present invention avoid the cost and/or difficulties encountered in fabricating doped single crystal electrodes while functioning with good efficiency.

These photoactive semiconductor mixed metal oxide materials are in fact true solid/solid solutions, i.e., by this it is meant that they are a uniformly dispersed homogeneous mixture, at the molecular or ionic level, of one or more substances (the solute) in one or more other substances (the solvent) analogous, for example, to the more commonly thought of solution types such as ethanol in water, a liquid/liquid true solution or table salt in water, a solid/liquid true solution.

Broadly stated, the photoactive semiconductor mixed metal oxide materials contain metal components all of which are derived from precursor substances selected from the group consisting of elemental metals, non-oxide metal compounds and mixtures thereof; said mixed metal oxide material corresponding to the formula $A_r^{va}M_y^{vm}O_z^{-2}$, where said formula represents the stoichiometry of the basic

repeating unit lattice cell; where M is the combination of component (a) metal and component (b) metal; A, when present, is at least one different metal which does not substantially alter the optical absorption accruing from M in the above formula; O represents oxygen, said formula being further characterized in that r, y, z, va and vm are defined by the relationship va(r) + vm(y) = 2z wherein r equals a value of from 0 to 2, inclusive, y is from 1 to 2, inclusive, z is from 1 to 7, inclusive, va equals the positive valence of A, vm equals the positive mean valence of M and the valence of oxygen is -2; and wherein all said metal components of said formula are selected from the group consisting of boron, aluminum, tin, lead, the transition metals of families 1b through 7b, inclusive, and 8 of the periodic table of elements and the lanthanide series; wherein M in the above formula comprises: a) 50 to 99.9 mole percent, based on the total metals mole fraction, of one or more component (a) metals; and b) 0.1 to 50 mole percent, based on the total metal mole fraction, of one or more component (b) metals; with the proviso that said component (b) metals are different than said component (a) metals and with the further proviso that said component (a) metals, when in comparable oxide form, have a larger band gap than said component (b) metals, when said component (b) metals are in their comparable oxide form. This true solid/solid solution provides an effective band gap and/or optical response optimally matched to the part of the energy spectrum desired for a particular utilization. The instant invention effectively shifts the resulting photoactive semiconductor mixed metal oxide materials optical absorption.

It has now been found that photoactive semiconductor film electrodes also can be readily and economically prepared having enhanced response to wavelengths of light linger than 400 nanometers, having satisfactorily long life, an extremely high resistance to attach and which do

not necessitate elaborate post-production steps to realize these advantages utilizing the novel mixed metal oxide materials described above.

It has also now been found that a solid electrolyte system (solid electrolyte) can be used in place of a liquid, a sol or gel electrolyte system to give the necessary ion transfer mechanism for an electrochemical and/or a photoelectrochemical cell. This solid electrolyte is in fact a combination of a liquid electrolyte bonded and/or otherwise contained by an ionomer or polymeric material. Thus, as an example, the lithium sulfonate form of NAFION ® with a liquid material composed of an aqueous solution of lithium hydroxide forms and electrolyte system which is a solid.

Generally, photoelectrochemical cells utilizing these solid electrolyte systems produce higher power outputs than traditional liquid electrolyte system cells.

In view of the foregoing and other factors, we have discovered a solid electrolyte system which not only improves some aspects of the state of the art of electrical conversion for photoelectrochemical cells but which also provides for a photoelectrochemical cell which is in effect a solid state device.

In the light of the foregoing, this invention is also directed broadly to photoelectrochemical cells comprising a first electrode, a second electrode with a solid disposed between said electrodes wherein said solid is an ionomer or polymer solvated with a liquid material capable of redox chemistry. The invention itself, however, both as to its organization and method of operation, as well as additional objects and advantages thereof, will best be understood from the following description when read in connection with the accompanying drawings.

The broader embodiment is directed to a liquid-junction photoelectrochemical semiconductor cell adapted for producing electricity, fuel, chemicals and/or

chemical energy using light radiation comprising: (I) a first electrode comprising a bulk or film electrode comprising: a photoactive true solid/solid solution semiconductor material having a band gap attuned to the specific region of the energy spectrum of the desired utilization and which in the case of a film electrode is disposed on a supporting electrically conductive substrate; (II) a second electrode comprising a conductive or semiconductive layer which is transparent to that region of the energy spectrum of the desired utilization of the first electrode (I) and which is disposed on a supporting conductive substrate, wherein said substrate is transparent to said region of the energy spectrum of said desired utilization, further characterized in that said second electrode, if a semiconductor, is of opposite conductivity type in relation to said first electrode; (III) an electrolyte disposed between, and in intimate contact with, both components I and II; (IV) a means for receiving the electrical energy produced; wherein component I is further characterized in that said semiconductor material thereof is a photoactive true solid/solid solution semiconductor material precursor substances selected from the group consisting of elemental metals, non-oxide metal compounds, and mixture thereof; said mixed metal oxide material corresponding to the formula $A_r^{+va}M_y^{vm}O_2^{-2}$, where said formula represents the stoichiometry of the basic repeating unit lattice cell; where M is the combination of component (a) metal and component (b) metal; A, when present, is at least one different metal which does not substantially alter the optical absorption accruing from M in the above formula; O represents oxygen, said formula being further characterized in that r, y, z, va and vm are defined by the relationship va(r) + vm(y) = 2z wherein r equals a value of from 0 to 2, inclusive, y is from 1 to 2, inclusive, z is from 1 to 7, inclusive, va equals the positive valence of A, vm equals the positive mean valence of M and the

valence of oxygen is -2; and wherein all said metal components of said formula are selected from the group consisting of boron, aluminum, tin, lead, the transition metals of families 1b through 7b, inclusive, and 8 of the periodic table of elements and the lanthanide series; wherein M in the above formula comprises: a) 50 to 99.9 mole percent, based on the total metals mole fraction, of one or more component (a) metals; and b) 0.1 to 50 mole percent, based on the total metal mole fraction, of one or more component (b) metals; with the proviso that said component (b) metals are different than said component (a) metals and with the further proviso that said component (a) metals, when in comparable oxide form, have a larger band gap than said component (b) metals, when said component (b) metals are in their comparable oxide form.

In an alternative embodiment of the instant invention, both electrodes can be immersed in the electrolyte contained in a containing means. In this instance, both electrodes may be opaque. Thus, the second electrode could be, for example, a material such as graphite.

## DESCRIPTION OF THE DRAWINGS

Figure 1 is an idealized representation of a single unit cell of true solid/solid solution photoactive semiconductor mixed metal oxide material of the formula $SrTi_{1-x}Rh_xO_3$.

Figure 2 is a graphic representation of the lattice parameter versus the rhodium content of a true solid/solid solution photoactive semiconductor mixed metal oxide of the formula $SrTi_{1-x}Rh_xO_3$. Brackets are used to indicate the estimated error for each point on the graph.

Figure 3 is a graphic representation of the absorption edge versus rhodium content of a true solid/solid solution photoactive semiconductor mixed metal oxide material of the formula $SrTi_{1-x}Rh_xO_3$ at 50% absorption (the bracketed value being an extrapolated value) and at 95% absorption.

Figure 4 is a graphic representation of changing the absorption edge (plotted as absorbance vs. wavelength) by changing the amounts of rhodium in the true solid/solid solution photoactive semiconductor mixed metal oxide material of the general formula $SrTi_{1-x}Rh_xO_3$.

Figure 5 is a graphic representation of the spectral response of $SrTiO_3$ compared to the spectral response of a true solid/solid solution photoactive semiconductor mixed metal oxide material of the formula $SrTi_{.86}Ru_{.14}O_3$. The $SrTiO_3$ curve is normalized from data presented in "Fundamental Absorption Edge of $SrTiO_3$," Redfield, D. and Burke, William J.; Physical Review B, Vol. 6, No. 8, Oct. 15, 1972.

Figure 6 is a schematic representation of the energy level relationship at the interface between a semiconductor electrode and an electrolyte.

Figure 7 is a perspective representation of a general type film electrode comprising a substrate 10, a film layer of photoactive semiconductor layer 20 and an electrical connector 30.

Figure 8 is an illustration of a photoelectrochemical cell in a cross-section utilizing a solid electrolyte system.

Figure 9 is a representation, in vertical cross-section, of a liquid-junction semiconductor photocell utilizing a liquid electrolyte.

Figure 10 is a representation, in vertical cross-section, of a liquid-junction semiconductor photocell utilizing a solvated ionomeric or polymeric electrolyte system.

An embodiment of a photocell of this invention is shown in Figure 11.

Figure 12 is a schematic representation of a liquid-junction semiconductor photocell of Figure 11 in a cross-section along the line 2-2 wherein the electrolyte and the thermal transfer medium are different.

Figure 13 is a schematic representation of a liquid-junction semiconductor photocell of Figure 11 in a cross-section along the line 2-2 wherein the electrolyte is also the thermal transfer medium.

## DETAILED DESCRIPTION

Figure 9 shows a cell configuration 10 in cross-section which comprises a first electrode comprising a semiconducting layer 11 disposed on an electrically conducting substrate 12 and a second electrode comprising a semiconductive layer 13 having a conductivity type opposite that of the first electrode disposed against an electrically conductive light transparent substrate 14 with a liquid electrolyte 15 disposed between and in intimate contact with both the first and second electrodes. Also shown is a containing means 16. It is understood that there are electrical contacts (not shown).

Figure 10 shows a cell configuration 20 in a cross-section which comprises a first electrode comprising a semiconductive layer 21 disposed on an electrically conductive substrate 22 and a second electrode comprising a semiconductive layer 23 having a conductivity type opposite that of the first electrode disposed against an electrically conductive light transparent substrate 24 with a solid electrolyte system 25 disposed between and in intimate contact with both the first and second electrodes. Also shown is an encapsulating means 26. It is understood that there are electrical contacts which are now shown.

In Figures 9 and 10, the first electrode may be a bulk electrode, in which case there is no separate substrate layer, e.g., in Figure 1 a bulk electrode would correspond to a single material (11) replacing the film and substrate (11+12) as shown.

The operation of the cells in both Figure 9 and 10 are similar and, therfore, the operation of Figure 9 will be understood to broadly describe the operation of Figure

10. Light (hv) passing through the second electrode (13+14) and through the electrolyte (15) is absorbed by the first electrode semiconductive layer (11). This causes a photoelectrochemical half-cell reaction to take place between the first electrode and the electrolyte and mandates an electrochemical half-cell reaction of the opposite form to take place between the second electrode and the electrolyte. Conversely in the embodiments where the second electrode (13+14) is also a semiconductor, the light absorbed by the second electrode semiconductive layer (13) causes a photoelectrochemical half-cell reaction to take place between the second electrode and the electrolyte, and mandates an electrochemical half-cell reaction of the opposite form to take place between the first electrode and the electrolyte. Thus, the electricity produced by each half-cell reaction is removed via electrical contacts (not shown) to an electrical utilization system such as, for example, a battery (also not shown). There is, however, in cases where only electricity is produced, no net mass change as the result of the two half-cell reactions balancing out. It is understood that in the embodiments where fuel and/or chemicals, with or without electricity production, are produced, a net mass change does occur. It is further understood that the description above is for those embodiments where both first and second electrodes are semiconductors. Where the first electrode is a semiconductor and the second electrode is a counter electrode (i.e., not a semiconductor), the half-cell reaction of the first electrode and electrolyte is balanced by a Schottky barrier type phenomenon between the second (counter) electrode and the electrolyte.

The cell configuration of Figure 11 shown generally at 10 incorporates a containing means 26 (encapsulant), a transparent conductive substrate 12 and a means for receiving the thermal energy produced indicated by input

and output pipes identified as 24. A means for receiving the electricity produced is not shown but is understood.

Figure 12 is a cross-sectional schematic representation of Figure 11 as indicated by the section line 2-2 comprising the overall cell 10, a first electrode comprising a semiconducting layer 18 disposed on an electrically conducting substrate 20 and a second electrode comprising a transparent semiconductive layer 14 having a conductivity type opposite that of the first electrode disposed on an electrically conductive light transparent substrate 12 with a liquid electrolyte or solid electrolyte system 16 disposed between and in intimate contact with both the first and second electrodes and a thermal energy transfer medium 22 in intimate contact with the electrically conductive substrate 20, a means, now shown, for moving said thermal energy transfer medium 22 by way of input and output pipes 24 and a containing means 26.

Light from a source not shown falling on the second electrode (12+14) passes through the second electrode and through the electrolyte (16) and is absorbed by the first electrode semiconductor layer 18. This causes a photoelectrochemical half-cell reaction to take place between the second electrode and the electrolyte and a photoelectrochemical half-cell reaction of the opposite conductivity type to take place between the first electrode and the electrolyte. The electricity produced by each half-cell reaction is removed via electrical contacts (not shown) to an electrical utilization system such as, for example, a battery (also not shown). There is however, in cases where only electricity is produced by the half-cell reactions, no net mass change as the result of the two half-cell reactions balancing out. Simultaneously with the occurence of these half-cell reactions, thermal energy produced by the absorbtion of light by the semiconductor layer 18 is transmitted through the substrate 20 to the thermal transfer medium 22 and removed

from the cell via 24 to a thermal energy storage or utilization system (not shown). It is understood that in the embodiments where fuel and/or chemicals, with or without electricity production, are produced, a net mass change does occur. It is further understood that the description above is for those embodiments where both electrodes are semiconductors. Where the first electrode is a semiconductor and the second electrode is a counter electrode (i.e., not a semiconductor), the half-cell reaction of the first electrode and the electrolyte is balanced by a Schottky barrier type phenomenon between the second electrode and the electrolyte.

Figure 13 is a cross-sectional schematic representation of Figure 11 as indicated by the section line 2-2 comprising the overall cell 10, a first electrode comprising a semiconducting layer 18 disposed on an electrically conducting substrate 20 and a second electrode comprising a transparent semiconductor layer 14 having a conductivity type opposite three of the first electrode disposed on an electrically conductive light transparent substrate 12 with a liquid electrolyte 16 disposed between and in intimate contact with both first and second electrodes. This electrolyte 16 serves simultaneously as the thermal transfer medium. The operation of this cell is similar to that of the cell in Figure 1 and, therefore, will not be further described. Figures 1 through 8, 11 through 13 and 17 will be discussed more particularly hereinbelow.

The overall operation of this type of photoelectrochemical cell can best be understood by referring to Figure 11. The illustration of Figure 11 shows an embodiment of the photoelectrochemical cell of the instant invention comprising: a first electrode comprising a conductive substrate (20) and a semiconductive layer (50); a second electrode (30) comprisng a gold layer electroplated on a copper mesh substrate (30); a solid electrolyte (40) is disposed between the first and second

electrodes and an encapsulant (10) is shown encasing the cell.

It is understood, though not shown, that suitable contacts and a complete electrical circuit are also necessary for utilization of a photoelectrochemical cell. Suitable contacts may be any generally known in the art such as, for example, wire soldered to or electrically conductive cement bonded to the cell electrodes. Suitable electrical circuits include any generally known in the art such as, for example, an appropriate d.c. motor and the necessary connecting wiring.

## FIRST ELECTRODE

True solid/solid solution photoactive semiconductor mixed metal oxide material bulk and film electrodes suitable for use as first electrodes provide improved spectral response and efficiency by combining at least two metal components all of which are derived from precursor substances selected from the group consisting of elemental metals, non-oxide metal compounds, and mixtures thereof. For convenience, two of the metal component precursors, and thus also the metals themselves (when referring to "M" as discussed hereinbelow), are herein grouped together as components (a) and (b). Component (a) precursors may be defined as non-oxide precursor substances, which in their oxide form, each have a band gap larger in size than any component (b) precursor, when subcomponent (b) precursor is in comparable oxide form. Stated the other way, the one or more component (b) precursors may then be defined as non-oxide precursor substances each of which in its oxide form has a narrower band gap than any component (a) in comparable oxide form. Components (a) and (b) are combined to form a true solid/solid solution. Generally, component (a) and (b) precursors being non-oxides are elemental metals, non-oxide metal compounds or organometallic compounds as well as mixtures thereof, with the foregoing compounds containing, in addition to the

metallic elements, other elements which are not exclusively oxygen. Suitable components (a) and (b) are those components containing metals selected from a group consisting of boron, aluminum, tin, lead, the lanthanide series and the transition metals. (As used throughout the specification and claims, the term "transition metal" means any metallic element of groups 1b, 2b, 3b, 4b, 5b, 6b, 7b or 8 of the periodic table of elements; and lanthanide series means any one of the element Nos. 58 through 71, inclusive, as they appear on pages 448 and 449 of the Handbook of Chemistry and Physics, Chemical Rubber Publishing Company, Cleveland, Ohio (1963)). More particularly, the metals of the components (a) and (b) precursors used to produce the true solid/solid solution photoactive semiconductor mixed metal oxide material of the instant invention are such that can result in the preparation of mixed metal oxide materials, the totality of which materials can be represented by the general formula $A_r^{va}M_y^{vm}O_z$. In the formula, M is a combination of component (a) metal and component (b) metal and A, when present, is at least one different metal which does not effectively and/or substantially alter the optical absorption in the electromagnetic region of interest accruing from M, and O represents oxygen; further characterized in that r, y, z, va and vm are defined by the relationship $(va)(r) + (vm)(y) = 2z$ wherein r is from 0-2, inclusive, y is from 1-2, inclusive, and z is from 1-7, inclusive, va equals the positive valence of A, vm equals the positive mean valence of M and the valence of oxygen is -2.

The A in the above general formula may be a single metal or A may be a combination of up to three different metals. In the formula, A may be any substantially, optically passive metallic ion (as defined below), such as, for example, zinc, strontium or lanthanide metals, wherein the lanthanide metals are any one of the elements Nos. 58 through 71, inclusive. The preferred metal or

metals A are strontium, zinc or one or more of the lanthanides.

In the above general formula, M is a combination of two to four different metals, preferably two different metals. The combination of metals is derived, as described above, so as to have at least one larger band gap and at least one narrower band gap metal compound. As an example, titanium and platinum are suitable, since $TiO_2$ has a larger band gap than $PtO_2$; so titanium is the component (a) metal while platinum serves as the component (b) metal.

It is understood that the above formula is used to represent the stoichiometry of the basic repeating unit lattice cell, so the values of r, y and z are often described in fractional notation such as, for example, $FrTi_{.67}Ru_{.33}O_3$. This type of notation represents the stoichiometry of the basic repeating unit lattice cell. This type of notation also allows for the most simple illustrative cell structure to be sued to describe the material in question (see, for example, Figure 1). Further discussion of how this type of notation is used can be found in, for example, <u>Structure, Properties and Preparation of Perovskite-Type Compounds</u>, Fransis S. Galasso, Pergamer Press, 1969. However, it is also understood that the formula $Sr_3Ti_2RuO_9Y$ is an equivalent expression of exactly the same compound. Thus, applicant realizes that using the more classical whole number formula format would result in values above those specified by applicant in his instant invention while in fact describing suitable compounds. Examples of suitable values of r, y and z and examples of the resulting formulae are, for example, r = 0, y = 1, z = 2 and the final oxide compound corresponds to the formula $MO_2$; r = 1, y = 1, z = 3 and the final oxide compound corresponds to the formula $AMO_3$; r = 2, y = 2, z = 7 and the final oxide compound corresponds to the formula $A_2M_2O_7$; r = 0, y = 2, z = 3 and the final oxide compound corresponds to

the formula $M_2O_3$; r = 0, y = 1, z = 1 and the final oxide compound corresponds to the formula MO. Other compounds having other final oxide forms are also possible. Some specific examples are, for example, (Pd,Ca)O representing the form MO; $(Ti,V)O_2$ representing the form $MO_2$; $(Fe,Al)_2O_3$ representing the form $M_2O_3$; $K(Ta,Nb)O_3$ representing the form $AMO_3$ and $La_2(Ti,Ru)_2O_7$ representing the form $A_2M_2O_7$.

Fiqure 1 is an idealized representation of a single unit cell of a photoactive semiconductor mixed metal oxide material of the instant inventon having the general form of $SrTi_{1-x}b_xO_3$. Shown is an idealized single unit cell of said material in the form of a cube having a strontium ion at each outer corner, an oxide ion on each of the six cube faces and a single ion in the center of the cube representing Ti and (b). It is understood that the choice of whether the center ion is Ti or (b) depends on the particular unit cell (if one could be separated from the whole) chosen. The size of the unit cell is denoted by a representing the distance (in angstroms, A) along an edge of said unit cell. It is further understood that the probability of finding a Ti ion or an (b) ion in a given particular unit cell depends on the particular ratio of Ti to (b) in the particular composition of interest.

Figure 2 is a graphic representation of the change in the lattice parameter (the length of an edge of a single unit cell in anstroms) at several different ratios of Rh content to Ti content in a mixed metal oxide of the general formula $SrTi_{1-x}Rh_xO_3$. The values of "x" in the figure are percent Rh (based on metal mole fraction of Rh in M of the general formula $A_R{}^{va}M_y{}^{vm}O_z{}^{-2}$).

Representative component (a) precursors may be any elemental metal and/or other metal non-oxide compound which is soluble or can be made soluble of aluminum, boron, tin, lead, certain lanthanides or the transition elements which form true solid/solid solutions of the form $MO_2$ such as zirconium and niobium. Component (a)

precursors may also be an elemental metal and/or other metal non-oxide compound which is soluble or can be made soluble of boron, aluminum, tin, lead, certain lanthanides or the transition metals which form true solid/solid solutions in the form $AMO_3$ such as, for example, titanium. Additionally, component (a) precursors may be an elemental metal and/or other metal non-oxide compound which is soluble or can be made soluble of aluminum, boron, tin, lead, certain lanthanides or the transition metals producing a material having the general formula $A_r^{va}M_y^{vm}O_z^{-2}$ (as defined above) wherein M is a mixture of a transition metal or tin or lead plus one or more other metals of boron, aluminum, tin, lead, certain lanthanides or transition metals. By the term "certain lanthanides", used herein to refer to component (a) metals is meant those lanthanides which have a band gap (as defined above) which is larger than any component (b). Component (a) comprises 50 to 99.9% based on the total metals mole fraction of M. Preferred component (a) precursors are non-oxide compounds of aluminum, niobium, lanthanum, tantalum, tin, titanium and zirconium, most preferably titanium. Some specific examples are titanium ethoxide, diethyl tin dibromide, zirconyl iodide and lanthanum chloride.

Metals of component (b) may be any one or more of the transition metals in families 1b through 7b and group 8 and/or of the lanthanide series elements 58 through 71, inclusive, and/or boron, aluminum, tin and lead as set out in the periodic table of elements, with the restriction that all component (b) metals must be different than component (a) metals. Component (b) comprises 0.1 to 50% based on the total metals mole fraction of M. Preferred component (b) precursors are those of the non-oxide metal compounds of iridium, manganese, chromium, iron, vanadium, platinuim, rhodium and ruthenium, most preferably rhodium and ruthenium. Specific compounds suitable as component (b) precursors include, for example, ferrous sulfate,

manganous acetate, ruthenium trichloride, rhodium nitrate and chloroplatinic acid.

Examples of preferred embodiments from which M may be derived are, for example, a non-oxide compound from the group niobium, lanthanum, tantalum, tin, titanium and zirconium one or more of which is used together with at least one non-oxide metal compound of the group rhodium, ruthenium, iridium, manganese, chromium, iron, vanadium and platinum. Other combinations of non-oxide metal compounds selected from the group boron, aluminum, tin, lead, the lanthanide series and the transition metals are also suitable. Presently preferred compounds from which M may be derived are those consisting of two non-oxide metal compounds, one selected from the group niobium, lanthanum, tantalum, tin, titanium and zirconium and the other selected from the group rhodium and ruthenium. Specific examples of M are titanium-ruthenium, titanium-rhodium and zirconium-chromium.

The A in the above general formula may be any substantially, optically passive metal (as defined below) such as, for example, zinc, strontium or one of the lanthanide series metals. It is to be understood that the materials used as A must meet the same requirements as precursors components (a) and (b) as far as composition and solubility. This is exemplified, for example, in the illustrative embodiment 1. Photoactive semiconductor mixed metal oxide materials so produced may be used for both n-type and p-type photoactive semiconductor materials; alternatively, the p-type material when used in a n-p solar cell may be a material such as PdO, CoO, or one of the various $Ln_2O_3$ (lanthanide series oxide) phases and/or solid/solid solutions of said $Ln_2O_3$ materials.

The method of producing the photoactive semiconductor mixed metal oxide material advantageously starts with reagent grade or preferably a purer grade chemical. It is of particular importance that the individual starting compounds be of at least reagent grade, so as not to

contain deleterious amounts, with the exception noted below, of metals other than the metal or metals of interest. This is generally referred to herein, for convenience, as using metals or metal compounds in purified form. Contamination by nonmetallic materials such as carbonate, nitrate, organic matter and the like is unimportant as they will be burned off during the subsequent firing step of the instant process. Finally, it should be pointed out, in some cases, a third or more metal which does not effectively and/or substantially alter the optical absorption in the region of interest is needed to make the formation of a true solid/solid solution possible. Thus, for example, titanium metal compounds and ruthenium metal compounds by themselves do not readily tend to form true solid/solid solutions of the form $MO_2$ (rutile type symmetry). However, in the presence of additional metal or metals (the A in the above general formula) such as strontium, they are highly prone to producing true solid/solid solutions, of the form for example, $AMO_3$ (perovskite type symmetries) where A represents strontium and M is the sum of titanium and rhodium. By substantially, optically passive third metal or metals is meant a metal or metals which, when used, does not effectively and/or substantially alter the optical absorption in the region of interest accruing from M. The preferred substantially, optically passive metal ions are strontium and lanthanum.

Applicant's general method of making the true solid/solid solution photoactive semiconductor mixed metal oxide material of the instant invention is as follows: (I) dissolving at least two different non-oxide metal ion precursors in liquid solvent; (II) separating said liquid solvent from said solution of step (I) by a separation means leaving an intimately blended solid in non-oxide form; and (III) converting said intimately blended solid of step (II) to a true solid/solid solution mixed metal oxide by firing; thereby producing said photoactive

semiconductor mixed metal oxide material. It is understood that in performing step (I) it may be necessary or advantageous to add additional solvent and/or add a quantity of different solvent after initial dissolution of one or more of the non-oxide metal ion precursors.

By the term "soluble" as used herein when referring to component (a) and (b) precursors is meant that such are generally easily dissolved in the solvent systems, generally with only simple mixing and without deleterious side effects such as solids precipitation or phase separations. By the term "being made soluble," as such is used herein, is meant that the component (a) and (b) precursors can be dissolved in solvent useful in the instant invention (and described in greater detail below), but such dissolution must be accomplished by special techniques to guard against deleterious phenomena such as phase separation or precipitation. A particular special technique is discussed hereinbelow. It is also understood that any component A precursor, if used, must also be "soluble" or be capable of "being made soluble" as described above. Thus, for example, precursors such as $SrCO_3$, as an A precursor, $RhCl_3$, as a component (b) precursor and $Ti(C_2H_5O)_4$, as a component (a) precursor are suitable. However, a compound such as $TiB_2$ is not suitable as it is not "soluble" in solvents or solvent systems as discussed hereinbelow, nor can it be "made soluble" by any known special technique in the solvents or solvent systems discussed hereinbelow.

For purposes of clarity, a specific preferred embodiment will be used to illustrate the method of making said true solid/solid solution semiconductor mixed metal oxide material of the instant invention. However, this preferred specific embodiment is in no way limiting nor is it the only possible method of producing said true solid/solid photoactive semiconductor mixed metal oxide material. This particular preferred embodiment is as follows: (1) titanium ethoxide $Ti(C_2H_5O)_4$ (component (a)

precursor) and rhodium trichloride $(RhCL_3)\cdot 3H_2O$ (component (b) precursor) and strontium carbonate $SrCO_3$ as the A precursor, all being non-oxide metal ion precursors are dissolved in aqueous HBr (solvent) to prevent the forming of a precipitate of $TiO_2$ thus producing a true solid/liquid solution; (2) methanol and water, used in combination as additional solvent, are added to produce a more dilute true solid/liquid solution; (3) all solvent is removed by freeze-drying said true solid/liquid solution using liquid nitrogen as the refrigerant causing said solvent to sublimate, leaving an intimate intermediate composition. Finally as a step (4) said intimate composition is then fired. This results in a true solid/solid solution of $SrTi_{x-1}Rh_xO_3$, i.e., mixed metal oxides useful for the instant invention. After cooling, they are rendered the appropriate size powder, advantageously to a size of from 0.1-200 microns for efficient use as a true solid/solid solution photoactive semiconductor mixed metal oxide material. The making of a powder from of the photoactive semiconductor mixed metal oxide materials can be accomplished by comminuiting using any known dry comminuting technique and as, for example, grinding in a ball mill. This powder may be used, using generally known methods in the art, as the film of a film electrode or in bulk as a bulk electrode.

Alternative systems of freeze-drying can be used, e.g., the use of an alcohol or a ketone and dry ice as the refrigerant in place of liquid nitrogen.

An alternative to freeze-drying but less preferred method of separating said solvent (in step 2) is to simultaneously precipitate the metallic substituents of the solution in finely-divided form by adding a precipitating agent to said solution of step 1. Examples of suitable precipitating agents are, for example, ammonium, aqueous ammonia, ammonium carbonate, ammonium bicarbonate, aqueous solutions of ammonium carbonate, aqueous solutions of

ammonium bicarbonate, 8-hydroxy-quinoline, hydrogen sulfide, and mixtures thereof.

Examples of suitable solvents include, for example, combinations of mineral acids or acetic acid with polar liquid mediums. The mineral acids and/or acetic acid may be used in combination. Representative mineral acids are hydrochloric acid, nitric acid, sulfuric acid, phosphoric acid, hydrobromic acid, perchloric acid, nitrous acid and sulfurous acid. The presently preferred acids are hydrochloric acid and hydrobromic acid. Suitable polar liquid mediums are, for example, water and alcohols, such as ethanol and methanol. However, it is understood that other known polar liquids are suitable and in certain instances polar liquids such as ketones, ethers, etc., are preferred. Presently preferred is water bacause of its low cost, availability and ease of handling.

Presently the area of greatest interest is in optimizing photoactive semiconductor material (having good longevity and resistance to corrosion) to the terrestrial solar spectrum. It is also possible, however, to use the photoactive semiconductor mixed metal oxide materials of the instant invention optimized to other sections of the electromagnetic spectrum. Thus, the photoactive semiconductor mixed metal oxide material may be optimized to the ultraviolet region of the electromagnetic spectrum and therefore be an excellent ultraviolet detector. An example of this type of semiconductor material is one of the general formula $SrTi_{1-x}Zr_xO_3$ wherein 0 is less than x is greater than 1. Another example of optimization other than to the terrestrial solar spectrum is, for example, a semiconductor material following the instant invention consisting of $SrTi_{1-x}Rh_xO_3$ where 0 is less than x is greater than 1. This particular true solid/solid solution semiconductor mixed metal oxide material has a band gap optimized to the infrared region of the electromagnetic spectrum and therefore makes an excellent infrared detector. These and many other specific optimization

regions along the electromagnetic spectrum are possible using the instant invention.

The term "firing" as used throughout the specification and claims means the controlled heating or annealing of the material. The controls include the temperature range, time at final temperature, cool down rate, rate of temperature increase, atmosphere used and flow rate of the atmosphere. Generally the temperatures used of from 20°C to 1600°C and the rate of temperature increase of from 50°C to 200°C per hour. The final temperature is generally held from 1 hour to 24 hours. The cool down rate generally ranges from 50°C to 200°C per hour. The atmospheres used are, for example, air, inert gas, hydrogen, and mixtures thereof. The flow rates are generally in the range of 1 ml/min to 51 per minute.

Additionally, the photoactive semiconductor mixed metal oxide materials of the instant invention may be further altered as to their electrical and/or optical properties with dopants, procedures and treatments known and commonly used in the art. They include, for example, laser annealing, reduction and/or oxidizing atmosphere annealing, and doping.

As shown in Figure 2, an example of electrodes according to the instant invention comprise the suitable substrate "10" and the true solid/solid solution transition metal oxides "20." An electrical connector "30" permits connection of the electrode to an external electrical circuit. The connector can, for example, be a wire which is welded or conductive epoxy welded to the substrate body or, alternatively, for example, may form an integral part of the shaped substrate body itself.

Where the photoactive semiconductor mixed metal oxide material is used as the film of a film electrode, a substrate is also necessary. The substrate may be, for example, a valve metal, a noble metal, a ceramic, a glass, other acceptable metals selected from the group consisting of the metals in groups 1a-5a, 1b-7b and 8 of the periodic

table of elements or a composite or an alloy of two or more of the above.

Examples of valve metals are titanium, tantalum and aluminum. These metals, traditionally, are considered useful as cathodes but not as anodes because they quickly become passified by the formation of an oxide coating if used as an anode. Noble metals, as used herein, are those metals gold, silver, platinum, palladium, iridium, rhodium, ruthenium and osmium. Examples of other metals which are suitable for use as a substrate are, for example, copper and steel. Sutiable examples of composites are, for example, titanium metal plated nickel and gold plated steel.

Suitable ceramic and glass materials include, for example, alumina, "common" window glass, borosilicate glass and flint glass. It is to be understood these types of nonconductor materials must have some type of conductive surface layer such as, for example, a vapor deposited layer of titanium.

The photoactive semiconductor mixed metal oxide electrode materials can, for example, be sprayed either by flame or plasma spraying or dipped or painted onto said substrate. Other application techniques are also applicable, for example, electrochemical deposition, sputtering, evaporation deposition and chemical vapor deposition. Generally, the film thickness used is from 100 angstroms to 500 microns in thickness. The thickness of the final film electrode may be acquired either as a single one-coat film or by coating the substrate with a number of coats to build up the desired thickness. The use of multiple coating operations allows for several important advantages to be incorporated into said film electrodes. One such advantage is that each layer may be treated individually with some type of post-deposition treatment. The post-deposition treatments suitable for use with said film electrodes include, for example, heating in a vacuum in a controlled atmosphere such as,

for example, nitrogen, argon, hydrogen or oxygen or a combination thereof, submitting the electrode film to elevated temperature such as, for example, 200° to 1800°C, ion implantation of dopants and/or laser annealing. Pretreatment of the electrodes is also possible and in some cases preferred. The pretreatments possible include, for example, those listed above as suitable post-deposition treatment.

Generally, the process of making the film electrodes encompassed herein is as follows: 1) coating a suitable substrate with; 2) a film of true solid/solid solution photoactive semiconductor mixed metal oxide material powder having a particle size of from 0.1 to 200 microns and 3) firing the coated substrate to produce said film electrode.

Alternatively, the suitable substrate may be coated with a film of the photoactive semiconductor non-oxide precursor solution before it has been fired to produce the oxide form of the material and then firing (step 3 above) to simultaneously produce the oxide form of the photoactive semiconductor material and the film electrode.

As described and understood herein, a photoelectrochemical cell (PEC) in its most basic form consists of a semiconductor electrode (here a thin film electrode), an electrolyte and a counter electrode. Light energy impinging on the surface of the semiconductor electrode is the driving force for chemical reaction which takes place at the interface between the semiconductor electrode and the electrolyte. The interface between the electrolvte and the counter electrode being used to complete the electrical circuit.

The energy level relationships at the interface between a semiconductor electrode and an electrolyte solution in contact therewith are shown schematically in Figure 6. Energy levels of the electrodes shown there, measured against a reference are $E_f$, the Fermi level, and $E_{cb}$ and $E_{vb}$, the lowest lying energy level of the

conduction band and the highest lying level of the valence band of the semiconductor, respectively. The energy band gap of the semiconductor is represented by $E_{bg}$.

Absorption of light by the semiconductor of an energy at least as large as $E_{bg}$ promotes an electron from the valence band to the conduction band and allows the subsequent separation of electron/electron hole pairs. In n-type titanium dioxide, the energy bad gap is normally about 3.0 eV corresponding to a light absorption edge of about 400 nanometers wavelength. In the photoactive true solid/solid solution semiconductor electrodes of the present invention, this absorption edge can be shifted as desired anywhere from the infrared region through the visible light spectrum and into the ultraviolet region thus making these electrodes responsive to any area of the energy spectrum desired for a particular utilization. Currently, of course, the most important adaptation is one in which the band gap and/or optical absorption is modified to be approximately 1.4 eV corresponding to a light absorption edge of about 800 nanometers representing the region of greatest theoretical energy conversion efficiency of the terrestrial solar spectrum.

In an n-type system, for example, photogenerated electrons promoted to the conduction band migrate through the semiconductor while the corresponding electron holes tend to migrate to the electrode/electrolyte interface. If the reduction-oxidation potential, $E_{redox}$, of the electrolyte solution or of some solute species is more negative than $E_{vb}$, interfacial electron transfer can occur to fill the electron holes, simultaneously oxidizing the solvent or solute species. Oxidation of the semiconductor material itself may also occur if the potential for anionic dissolution, $E_d$, of the material is more negative than $E_{vb}$. Whether oxidation of some electrolyte species or the semiconductor material itself is the predominating reaction at the illuminated electrode may depend upon the relative surface rates of the two reactions.

If $E_d$ is more negative than $E_{redox}$, then the oxidized form of the electrolyte species, once formed by the photoassisted oxidation reaction is capable of oxidizing the semiconductor material and the electrode surface may be corroded. The choise of modifying oxide is thus governed in part by the relative values of $E_d$ for the material and $E_{redox}$ for the oxidation reaction in which the modified type true solid/solid solution electrode is to be employed.

It has been found that the instant invention true solid/solid solution photoactive semiconductor mixed metal oxide thin film electrodes can be adjusted to absorb light anywhere along the electromagnetic spectrum from UV to infrared, where similar types of photoelectrodes of the prior art have been only minimally effective on the whole.

An example of a bulk first electrode would be a solid rod of photoactive true solid/solid solution semiconductor material immersed in an electrolyte.

SECOND ELECTRODE

The second electrode comprises both a transparent substrate and a transparent conductive or semiconductive layer. As herein and hereafter used, transparent means transparent to that portion of the electromagnetic spectrum to which the band gap of the first semiconductive material has been attuned. Additionally, it is understood that these materials are transparent, as defined above, at the thicknesses and in the geometric configurations used for the instant invention and not necessarily at all thicknesses. Thus, for instance, a gold film is transparent to most visible light when used in relatively thin layers (i.e., approximately 50 microns) but becomes opaque when relatively thick (i.e., 0.01 inch). Examples of suitable transparent substrates are, for example, glass, diamond, poly-(methylmethacrylate)-type polymers (PLEXIGLAS®), fiber filled resin, polyurethane elastomer,

silicones, silicates, metal films and combinations thereof.

It is understood that while materials such as, for example, PLEXIGLAS® will work well as a transparent substrate, a combination of PLEXIGLAS® coated with silicone (organosiloxane polymer) is even better because the silicone protects the PLEXIGLAS® from adverse effects of weathering. It is also understood that known methods for coating PLEXIGLAS® with silicone, for example, are contemplated for preparing materials which are useful in the instant invention. For instance, a silicone elastomer dissolved in a volatile solvent may be coated onto a sheet of PLEXIGLAS® and the solvent allowed to dry thereby leaving a thin layer of silicone elastomer on the surface of said PLEXIGLAS®.

Suitable transparent semiconductive or conductive materials are, for example, ternary metal oxides such as $La_{.01}Sr_{.99}SnO_3$, vapor deposited gold metal film and chalcogenides. Materials such as metal mesh may also be used within the scope of the invention as a transparent second electrode. An example of such a mesh material is a gold-plated copper mesh of fine "hair-like" filaments.

It is also understood that in some cell configuration known in the art, carbon or graphite may be used as the second electrode. It is understood that the second electrode must be of the opposite conductivity type of the first electrode in the embodiment where both electrodes are semiconductors. Therefore both electrodes can not be identical.

Suitable transparent second electrodes are, for example, $La_{.01}Sr_{.99}SnO_3$ disposed as a film on PLEXIGLAS® and $Cd_2SnO_4$ disposed as a film on nylon or on a polyester (Mylar®).

The transparent second electrode may be applied to the transparent substrate by various methods known in the electrode art. Examples of these methods are, for

example, pressing, bonding, vapor deposition, fusing, electrolysis deposition and chemical vapor deposition.

## ELECTROLYTE

The electrolytes used in the instant invention may be any commonly known to the art such as, for example, liquids, gels and sols. These materials must be transparent in the form and thicknesses used for a particular embodiment.

Examples of solvents for use in liquid electrolytes are, for example, water, ammonia, aqueous redox couple solutions and halogenated hydrocarbons such as FREON R-12®, FREON R-22® and FREON R-11®.

Examples of suitable redox-couples are, for example, $AsO_2^{-1} + 4OH^{-1} = AsO_4^{-3} + 2H_2O + 2e$(1m NaOH); $3Br^{-1} = Br_3^{-1} + 2e$; $C_6H_4(OH)_2 = C_6H_4O_2 + 2H^{+1} + 2e$; $Cb^{+3} + H_2O = CbO^{+3} + 2H^{+1} + 2e$(6m HCl); $Ce^{+3} + H_2O = CeOH^{+3} + H^{+1} + e$; $2Cl^{-1} = Cl_2(g) + 2e$; $Co^{+2} = Co^{+3} + e$(3m $HNO_3$); $Co(CN)_6^{-4} = Co(CN)_6^{-3} + e$; $Cr^{+2} = Cr^{+3} + e$; $2Cr^{+3} = Cr_2O_7^{-2} + 3e$(2m $H_2SO_4$); $Cr^{+3} = CrO_4^{-2} + 3e$(1m NaOH); $Cu^{+1} = Cu^{+2} + e$; $Fe^{+2} = Fe^{+3} + e$; $Fe(C_{12}H_8N_2)_3^{+2}$ = Fe(phenanthroline)$_3^{+3}$ + e; $Fe(CN)_6^{-4} = Fe(CN)_6^{-3} + e$(1m $H_2SO_4$); $Fe(CN)_6^{-4} = Fe(CN)_6^{-3} + e$(0.01m NaOH); $H_2 = 2H^{+1} + 2e$; $H_2 + 2OH^{-1} = 2H_2O + 2e$; $Hg_2^{+2} = 2Hg^{+2} + 2e$; $2H_2O = O_2 + 4H^{+1} + 4e$; $H_2O = O(g) + 2H^{+1} + 2e$; $3I^{-1} = I_3^{-1} + 2e$; $Ni(CN)_3^{-2} + CN^{-1} = Ni(CN)_4^{-2} + e$; $4OH^{-1} = O_2 + 2H_2O + 4e$; $H_2PO_2^{-1} + 3OH^{-1} = HPO_3^{-2} + 2H_2O + 2e$; $H_3PO_2 + H_2O = H_3PO_3 + 2H^{+1} + 2e$; $Pb^{+2} + 2H_2O = PbO_2 + 4H^{+1} + 2e$; $PdCl_4^{-2} + 2Cl^{-1} = PdCl_6^{-2} + 2e$; Quinhydrone electrode, $H^{+1}$, a=1; $Rh^{+3} + H_2O = RhO^{+2} + 2H^{+1} + e$; Ru(III) = Ru(IV) + e(HCl); $S^{-2} + 6OH^{-1} = SO_3^{-2} + 3H_2O + 6e$; $SO_3^{-2} + 2OH^{-1} = SO_4^{-2} + H_2O + 2e$; Sn(II) = Sn(IV) + 2e(0.1m HCl); Sn(II) = Sn(IV) + 2e(2m HCl); $Tl^{+1} = Tl^{+3} + 2e$; $V^{+2} = V^{+3} + e$; $V^{+3} + H_2O = VO^{+2} + 2H^{+1} + 1e$; $VO^{+2} + 3H_2O = V(OH)_4^{+1} + 2H^{+1} + e$; V(IV) = V(V) + e(1m HCl); V(IV) = V(V) + e(1m NaOH); $W(CN)_8^{-4} = W(CN)_8^{-3} + e$; and $Yb^{+2} = Yb^{+3} + e$. It is understood that these are the reactions at one electrode and that an opposite reaction

must take place at the other electrode. A presently preferred redox couple is an aqueous solution of NaOH.

Examples of suitable gel electrolytes are, for example, aqueous solutions of NaOH and KNOX gelatin.

SOLID ELECTROLYTE

In one preferred embodiment, the electrolyte is a solid electrolyte system comprising a combination of an ionomer or polymer solvated with a liquid electrolyte material, capable of redox chemistry.

The solid electrolyte material must be transparent to that portion of the electromagnetic spectrum corresponding to the band gap of the first electrode. It is understood that these materials are transparent, as defined above, at the thicknesses used for the instant invention but not necessarily at all thicknesses. It is further understood that the minimum criteria for use of a particular ionomer or polymer is that it is substantially transparent, and while being conductive to ion transfer is a nonconductor of electrons. Suitable ionomers are the various chemical forms of a copolymer having recurring structural units of the formula

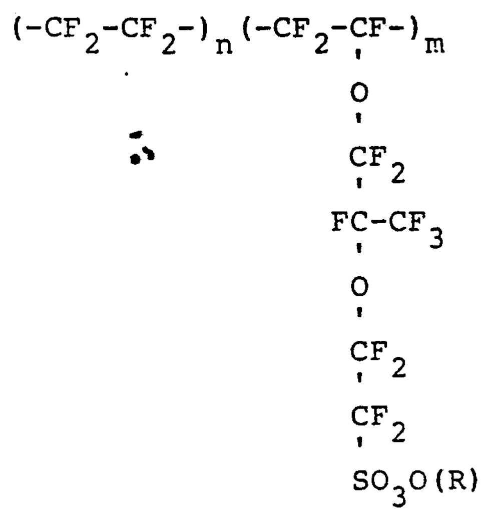

where R = (H, Li, K or Na), n = 0 or 1, m = 1, 2 or 3 and the copolymer has an equivalent weight in the range of 1000 to 4000. NAFION® is an example. Examples of preferred ionomers are the lithium sulfonate form of

NAFION®, the sodium sulfonate form of NAFION®, and the potassium sulfonate form of NAFION®. The lithium sulfonate form of NAFION® may be represented as a copolymer having recurring structural units of the formula

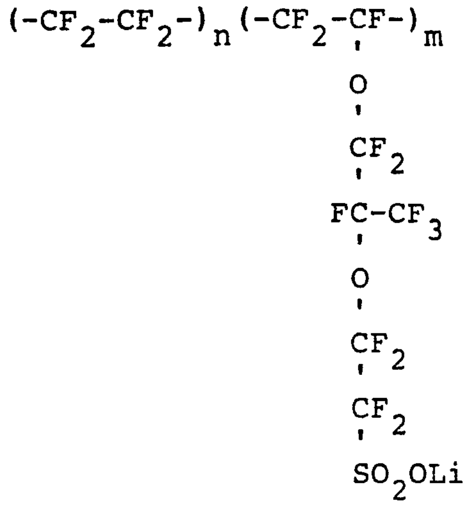

where n = 0 or 1, m = 1, 2 or 3 and the copolymer has an equivalent weight in the range of 1000 to 4000. A suitable group of polymers are those polymers commonly referred to as "hydrogels." Particularly preferred among the hydrogels is poly-(hydroxyethyl methylacrylate) (HEMA) which may be represented by the formula

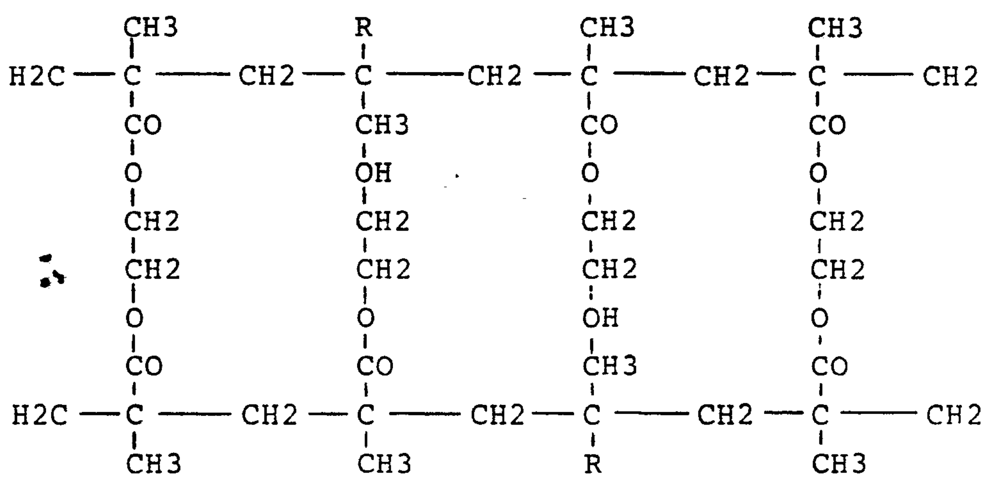

wherein R = COOCH2CH2OH.

It is further understood that multilayer composites of the above materials may be used as the solid material which is solvated with liquid. This may include, for example, two or more types of ionomer, or two or more

types of polymer or at least one layer each of ionomer and polymer.

Examples of solvating liquids useful in the liquid materials of the instant invention are, for example, water, ammonia, acetonitrile, N,N-dimethyl formamide, alcohols such as butanol, ethers such as ethyl ether, propylene carbonate, n-butylpyridinium halides, and halogenated hydrocarbons such as FREON R-12, FREON R-22 and FREON R-11. These materials being liquid at normal temperature and pressure are easily handled and provide for the use of simple solution techniques for incorporating the necessary redox-couples. Water is particularly preferred because it may also be used as the redox-couple simultaneously.

Examples of suitable redox-couples are, for example, the same as those hereinabove described for traditional liquid electrolyte systems. Also suitable for use in the instant invention as redox-couples are, for example, polysulfide and polyselenide redox-couples. The presently preferred redox couple is $4e^- + O_2(g) + 2H_2O = 4OH^-(aq)$. Most particularly preferred liquid materials are aqueous solutions of sodium hydroxide, potassium hydroxide, potassium chloride, and lithium hydroxide.

The solvating of the ionomer or polymer is most easily accomplished by soaking the ionomer or polymer in the liquid material containing the redox-couple in solution in the solvating liquid. Other methods of solvating commonly understood in the art may also be used. Additionally, one preferred method is that of casting the ionomer or polymer onto the surface of one of the electrodes and then soaking the electrode/cast ionomer or polymer composite in the liquid material. "Solvating" as herein and hereafter used means the combining of the ionomer or polymer with the liquid material.

It is understood that the actual deposition of said solid electrolyte between said electrodes can be done by techniques commonly known and understood in the art.

Examples of these techniques are, for example, casting, extruded sheet placed between said electrodes and "in situ" polymerization.

Examples of suitable materials are, for example, the lithium solfonate form of NAFION® and polyhydroxyethylmethylacrylate (HEMA). Presently, the preferred method of utilizing these materials is by casting them directly onto the first electrode and then solvating them with a liquid electrolyte. It is understood, however, that other techniques for using these solid-type electrolytes in the instant invention known in the art may also be used.

## THERMAL TRANSFER MEDIUM

The thermal transfer medium, when used, may be the same material as the electrolyte as described above. The thermal transfer medium may also be a different material than the electrolyte. Further, as discussed above, the electrolyte may act simultaneously as the thermal transfer medium. Finally, the thermal transfer medium may be separate from the material used as the electrolyte. This thermal transfer medium can be a liquid, a gas, a gel or a sol. Examples of suitable gases include, for example, ammonia, halogenated hydrocarbons and air. Air being the least expensive is preferred in many applications. Examples of suitable liquids include, for example, water, ammonia, and halogenated hydrocarbons. It is also contemplated that mixtures of gases and liquids to form "fogs" or "mists" are also suitable such as, for example, an air/water mist or fog.

## CONTAINING MEANS

A containing means when necessary is provided for containing the electrolyte in proper intimate contact with the electrodes. Suitable examples of materials useful as the containing means for the electrolyte are, for example, glass, ceramic, metal, coated metal, fluorinated ethylene-propylene resin (FEP), polyvinylidene difluoride

(PVDF), tetrafluoroethylene (TFE), glass fiber filled resin, polyvinyl chloride (PVC), post-chlorinated polyvinyl chloride (CPVC), plastic, and combination thereof. Examples of metals suitable for use include stainless steel, aluminum, and titanium. Examples of coated metals suitable for use include, for example, steel coated with PVC, aluminum coated with polyurethane elastomer and steel lined with glass fiber filled resin. As herein described, plastic means materials such as thermoplastic, polyurethanes, resins, elastomers, polyesters, nylons and nylon-type materials.

RECEIVING MEANS

The electricity produced may be collected and/or used by methods known in the art. For example, the electricity produced may be used directly in an electrical circuit. Alternatively, the electricity may be stored, for example, in a chemical storage battery. The photoelectrochemical (PEC) cells may also be used to produce chemicals, fuels and/or chemical energy by methods known and practiced in the art.

Several embodiments follow to illustrate the method of making said true solid/solid solution semiconductor mixed metal oxide material useful in the instant invention. However, these embodiments are in no way limiting nor are they the only possible methods of producing said true solid/solid photoactive semiconductor mixed metal oxide material. These particular embodiments are as follows:

1

Strontium/Titanium Stock Solution: 147.6 g (1 mole) of $SrCO_3$ (reagent grade) was dissolved in approximately 600 mls of a solvent solution having a ratio (vol/vol) of 1 part concentrated aqueous HBr to 4 parts deionized water. When dissolution of the $SrCO_3$ was complete, 227.9 g (1 mole) of $Ti(C_2H_5O)_4$ (reagent grade) was added and

mixed until complete dissolution, enough additional solvent solution was added to make 1 liter. A clear, yellow solution which keeps for 6 to 7 days at room temperature resulted. It is important to dissolve the $SrCO_3$ in most of the solvent solution first to help keep the $Ti(C_2H_5O)_4$ from precipitating the Ti out as $TiO_2$ immediately.

Strontium/Rhodium Stock Solution: 1.84 g (0.0125 mole) of $SrCO_3$ (puratronic grade) and 3.29 g (0.0125 mole) of $RhCl_3 \cdot 3H_2O$ (reagent grade) was dissolved and diluted to 1 liter volume in a solvent solution having a ratio (vol/vol) of 1 part concentrated aqueous HBr, 1 part isopropyl alcohol and 6 parts deionized water. The resulting solution was stored in a freezer at -10°C. This solution seems to store indefinitely at this temperature. Inductively coupled plasma confirmed a Sr to Rh ratio of 1:1.

Five true solid/solid solution photoactive materials with differing amounts of Ti and Rh as shown in Table 1 were prepared by a) intimately mixing the appropriate amounts of the strontium-rhodium and strontium-titanium solutions and b) precipitating the metals by adding a solution containing 150 g of $NH_4HCO_3$, 80 ml of aqueous concentrated $NH_3$ and 100 ml of deionized water. The resulting precipitate containing solution was centrifuged in an International Equipment Co. Model EXD centrifuge at a setting of 50 and the resulting supernatant removed by decanting. The precipitates were placed in alumina crucible with lids and were annealed in a Blue "M" box-type muffle furnace to approximately 600° to 800°C at a rate of about 100°C/hour in an air atmosphere. The resulting solid/solid solution mixed metal oxides were allowed to cool and were stored in polyethylene bottles.

TABLE 1

| Sample No. | Stock Solution Sr-Ti (ml) | Stock Solution Sr-Rh (ml) | x(%)* |
|---|---|---|---|
| 1a | 60 | 240 | 4.8 |
| 1b | 200 | 180 | 1.1 |
| 1c | 200 | 120 | 0.74 |
| 1d | 200 | 90 | 0.56 |
| 1e | 200 | 45 | 0.28 |

* The value of x is a nominal value which, due to a number of possible loss mechanisms (i.e., metal staying in solution, precipitate too fine to bring down during centrifuging, vaporization, etc.), may be altered as to the actual final metal mole ratio.

2

Photoactive semiconductor materials of the formula $SrTi_{1-x}Rh_xO_3$ were prepared as follows:

Three solid/solid solution photoactive materials with differing amounts of Ti and Rh as shown in Table 2 were prepared by a) intimately mixing the appropriate amounts of the strontium-titanium stock solution of Example 2 with appropriate amounts of the strontium-rhodium stock solution of Example 1 and b) precipitating the metals by adding a solution containing 150 g of $NH_4HCO_3$, 80 ml of aqueous concentrated $NH_3$ and 100 ml of deionized water. The resulting precipitate containing solution was centrifuged in an International Equipment Co. Model EXD centrifuge at a setting of 50 for approximately 20 minutes, and the resulting supernatant removed by decanting. The remaining precipitate cake was desiccated at about 95°C under vacuum for 24 to 72 hours. The cake was placed in a Coors® porcelain crucible and was then annealed in air in a Blue "M" box-type muffle furnace for approximately 10 hours at about 600°C, cooled and stored in a polyethylene bottle. These materials were then pressed in a hydraulic press, placed in a platinum foil cup and then fired in a Deltec Horizontal 1½" OD tube

furnace using commercial 99.8% $Al_2O_3$ 1½" OD by 1 meter tubes from Coors Porcelain Co. in an oxygen atmosphere of 200 cc/min brought to 1650°C. The temperature was raised from room temperature at a rate of about 200°C/24 hours and then held at 1650°C for approximately 2 hours. The materials were then cooled at a rate of approximately 400°C/hour in an $O_2$ atmosphere.

TABLE 2

| Sample No. | Stock Solution Sr-Ti (ml) | Stock Solution Sr-Rh (ml) | x(%)* |
|---|---|---|---|
| 2a | 400 | 40 | 0.25 |
| 2b | 400 | 16 | 0.10 |
| 2c | 200 | 0 | 0 |

* The value of x is a nominal value which, due to a number of possible loss mechanisms (i.e., metal staying in solution, vaporization, etc.), may be altered as to the actual final metal mole ratio.

3

Three true solid/solid solution photoactive materials for $SrTi_{1-x}Rh_xO_3$, with varying volumes of x as shown in Table 3, were prepared following the procedure of Example 2. These three materials were then tested for their light absorption edge using a Gilford Industries Photoacoustic Spectrometer. The samples were scanned from 350 nanometers to 2500 nanometers using a Xenon arc source and a ZnSe standard reference. The shift of the absorption edge with change in the amount of rhodium present is shown in Figure 4. The absorption edge data for $SrTiO_3$ was normalized from data in "Fundamental Absorption Edge of $SrTiO_3$," Redfield, D. and Burke, William J., Physical Review B. Vol. 6, No. 8, Oct. 15, 1972.

TABLE 3

| Sample No. | Ti (%) | Rh (%) |
|---|---|---|
| 3a | 80 | 20 |
| 3b | 90 | 10 |
| 3c | 96 | 4 |
| 3d | 100 | 0 |

4

A true solid/solid solution photoactive material of the form $SrTi_{.86}Ru_{.14}O_3$ was prepared following the procedure of Example 1. This material was mixed with 1% Ta (as the alkoxide), pressed into a disc and heated following the procedure of Example 2. The photocurrent ($A/m^2$) of this disc was determined from 350 nanometers to 750 nanometers. The values were determined by sequentially placing a series of sharp-cut, long pass, glass, 2"x2" filters, supplied by the Schott Glass Co., between the Xenon arc light source and the true solid/solid solution photoactive material to change the spectral output of this Xenon arc light source. This resulted in changing the spectral output of this Xenon arc light source from one which closely approximates the solar spectrum to one which contains only infrared wavelengths. The photocurrent ($mA/cm^2$) was measured with each separate filter in the series between said source and said photoactive material. The testing was done on an optical bench using a solar cell made up of: 1) n-type electrode of $SrTi_{.86}Ru_{.18}O_3$ material of the instant invention on a titanium metal substrate; 2) a graphite counter electrode; 3) a graphite container and 4) an electrolyte consisting of an aqueous 1 molar KCl solution.

The results are compared graphically in Figure 5. A normalized spectral response curve for $SrTiO_3$ taken from data in "Fundamental Absorption Edge of $SrTiO_3$," Redfield, D. and Burke, William J., Physical Review B, Vol. 6, No. 8, Oct. 15, 1972, is also presented.

Thus, an illustrative embodiment of a liquid-junction semiconductor photoelectrochemical cell (PEC) of the present invention may be assembled by first inserting a film electrode made of a titanium metal substrate and a semiconductor mixed metal oxide layer of $SrTi_{.95}Pt_{.05}O_3$ on the floor of a containing means made from fluorinated ethylene-propylene resin (FEP). An electrolyte made of 1M KOH aqueous solution saturated with air is then placed in the containing means. A second electrode made up of $La_{.01}SR_{.99}SnO_3$ disposed on a glass substrate placed over and in contact with the electrolyte and seal the containing means. When this embodiment of the PEC is outfitted with wuitable electrical contacts and measuring equipment and exposed to sunlight, it will be found to generate an electrical current utilizing electromagnetic energy from the visible light region of the solar spectrum.

5

0.01 Percent Lithium Sulfonate Form NAFION® Solution:

The lithium sulfonate form NAFION® solution used in this experiment was prepared as follows: 10 grams of lithium sulfonate form NAFION® powder was dissolved in 90 grams of dibutylformamide with heating to 200°C. When solution was complete, the solution was allowed to cool to room temperature resulting in a gel-like material containing 10 weight % lithium sulfonate form NAFION®. One gram of this material was dissolved in 9 grams of dibutylformamide resulting in a one weight % NAFION® solution. One gram of this solution was, in turn, diluted with 9 grams of HPLC grade methanol resulting in a solution containing 0.1 weight % NAFION®. Finally, one gram of the 0.1 weight % NAFION® solution was diluted with 9 grams HPLC grade methanol resulting in a solution having a lithium sulfonate form NAFION® concentration of 0.01 weight %.

A titanium metal coupon approximately 3/4"x2-7/8" was cut from a sheet of titanium metal and cleaned by immersing in an aqueous solution of HCl (50% by volume) overnight. The coupon was then removed from the HCl solution using Pt tipped tweezers, washed with deionized water and blotted dry with a paper towel. The coupon was coated with an aqueous solution containing 100 ppm (mole fraction) lanthanum in titanium. The coating was carried out by painting a very thin layer of this titanium/-lanthanum solution onto the coupon using a polypropylene brush having no metal parts. The coated titanium coupon was placed in a horizontal position on a flat sheet of titanium metal and placed in a Blue M box furnace having a temperature of 110°C for approximately 5 minutes. The coupon was removed and quickly placed in a covered container in a vertical position and placed in a Blue M box furnace having a temperature of 650°to 675°C for not more than 10 minutes. The coupon in the closed container was removed from the furnace and allowed to cool to room temperature while still covered. The coupon was coated with a film of the NAFION® solution described above using a polypropylene brush having no metal parts. The NAFION® coated coupon was placed in a Blue M box furnace for 30 minutes at 110°C at which time the temperature was taken up to 200°C for an additional 30 minutes to insure removal of both the methanol and any residual dibutylformamide present. The coated coupon was cooled to room temperature. At this point, the coating is a very thin, transparent, dry material that can not be seen by the naked eye. A piece of gold-coated copper grid from Lancaster Metal Science approximately 3/4"x2-1/2" in size was embossed on top of the NAFION® coated titanium coupon in a Carver Model B hydraulic press using 10,000 pounds pressure. The NAFION® coating was hydrated with an aqueous 5M NaOH solution by immersing in the NaOH solution for approximately 10 minutes. Alligator clips were attached for electrical contacts and a volt-ohm meter was

connected to complete the electrical circuit. The completed photoelectrochemical cell and electrical circuit was exposed to sunlight on a bright, sunny afternoon, and a 2 mV voltage was observed. When shaded, the photoelectrochemical cell had an output of 0 mV.

6

A titanium metal coupon prepared as in Example 5 was coated with the titanium/lanthanum solution as in Example 5 and then coated with the lithium sulfonate form NAFION® solution as in Example 5. The second electrode comprised two strips, one on each edge of the coupon approximately 1/4"x3". This second electrode was a gold/palladium alloy consisting of 60% gold and 40% palladium vacuum evaporated onto the coupon using the vacuum evaporation technique generally known in the microscopy field in a Denton Model DV502 vacuum evaporator using a gold palladium alloy wire as the source of the plating material. The center strip of the coupon was protected from deposition of the gold/palladium alloy by placing a piece of paper over it before placing it in the vacuum evaporator. Alligator clips were attached for electrical contacts and a VOM was connected to complete the electrical circuit. The completed photoelectrochemical cell and electrical circuit was exposed to sunlight on a bright, sunny afternoon, and a 50 mV voltage and 80 uA current was observed. When this photoelectrochemical cell was shaded, an output of 0 mV and 0 uA was observed.

While there has been shown and described what is believed at present to constitute the preferred embodiments of the present invention, it will be obvious to those skilled in the art that various changes and modifications may be made therein without departing from the scope of the invention as defined by the appended claims.

CLAIMS:

1. A photoelectrochemical semiconductor cell, for producing electricity, fuel, chemicals and/or chemical energy using light radiation, which comprises:

I a first electrode comprising a bulk or film electrode comprising a semiconductor material having a band gap attuned to the specific region of the energy spectrum of the desired utilization and which, in the case of a film electrode, is disposed on a supporting electrically-conductive substrate;

II a second electrode comprising a semiconductive or conductive layer which is transparent to that region of the energy spectrum of the desired utilization of the first electrode, the layer being disposed on a supporting electrically-conductive substrate which is also transparent to that region of the energy spectrum of the desired utilization, wherein the second electrode, if a semi-conductor, is of opposite conductivity type to the first electrode;

III an electrolyte disposed between, and in intimate contact with, both the first electrode and the second electrode; and

IV means for receiving the electrical energy produced;

characterised in that

the semiconductor material of the first electrode is a photoactive true solid/solid solution mixed metal oxide material derived from precursor substances selected from elemental metals, non-oxide metal compounds and mixtures thereof;

that the mixed metal oxide material corresponds to the formula $A_r^{va}M_Y^{vm}O_2^{-2}$ representing the stoichiometry of the basic repeating unit lattice cell, wherein M is the combination of a component (a) metal and a component

(b) metal, A, when present, is at least one different metal which does not substantially alter the optical absorption accruing from the metals constituting M, O represents oxygen, r, y, va and vm are defined by the relationship $va(r) + vm(y) = 2z$, wherein r is from 0 to 2 inclusive, y is from 1 to 2 inclusive, z is from 1 to 7 inclusive, va is the positive valence of A and vm is the positive mean valence of M;

that all the metals in the mixed metal oxide material are selected from boron, aluminium, tin, lead, transition metals of groups 1b to 7b inclusive and group 8 of the Periodic Table of Elements and metals of the lanthanide series; and

that M comprises:

(a) 50 to 99.9 mole percent, based on the total metal mole fraction, of one or more component (a) metals; and

(b) 0.1 to 50 mole percent, based on the total metal mole fraction, of one or more component (b) metals,

with the provisos that (i) the component (b) metals are different from the component (a) metals and (ii) that the component (a) metals, when in comparable oxide form, have a larger band gap than the component (b) metals, when in comparable oxide form.

2. A photoelectrochemical cell according to claim 1, arranged for simultaneously producing thermal energy, having a thermal transfer medium in intimate contact with the first electrode or the substrate thereof and means for receiving the thermal energy produced.

3. A photoelectrochemical cell according to claim 1, arranged for simultaneously producing thermal energy, wherein the electrolyte is also a thermal transfer medium, the cell having means for receiving the thermal energy produced.

4. A photoelectrochemical cell according to any preceding claim, wherein the utilizable light radiation comprises the visible light spectrum, the infrared light spectrum, the ultraviolet light spectrum and combinations thereof.

5. A photoelectrochemical cell according to any preceding claim, wherein the first and second electrodes are immersed in the electrolyte.

6. A photoelectrochemical cell according to any preceding claim, wherein the electrolyte is selected from liquids, sols and gels.

7. A photoelectrochemical cell according to any preceding claim, wherein the electrolyte is a solid system comprising an ionomer or polymer solvated with a liquid electrolyte capable of redox chemistry.

8. A photoelectrochemical cell according to any of claims 1 to 6, wherein the electrolyte contains the redox couple $4e^- + O_2(g) + 2H_2O = 4OH^-(aq)$.

9. A photoelectrochemical cell according to any of claims 1 to 6, wherein the electrolyte is an aqueous redox couple in a solvent.

10. A photoelectrochemical cell according to claim 6, wherein the electrolyte is an aqueous solution of NaOH saturated with oxygen.

11. A photoelectrochemical cell according to any preceding claim, having containing means for containing the electrolyte.

12. A photoelectrochemical cell according to claim 11, wherein the containing means comprise glass, ceramic material, metal, coated metal, plastics material, glass-fibre-filled resin material or any combination thereof.

13. A photoelectrochemical cell according to claim 12, wherein the containing means comprise tetrafluoroethylene (TFE), polyvinyl chloride (PVC) or post-chlorinated polyvinyl chloride (CPVC).

14. A photoelectrochemical cell according to any preceding claim, wherein the second electrode has a band gap of approximately 1.4 eV corresponding to an electromagnetic energy absorption edge of approximately 800 nanometres.

15. A photoelectrochemical cell according to any preceding claim, wherein the means for receiving the electrical energy comprise an electrical circuit, a storage means or a combination thereof.

16. A photoelectrochemical cell according to claim 15, wherein the storage means comprise a battery.

17. A photoelectrochemical cell according to any of claims 1 to 14, wherein the electrical receiving means alternatively comprise one or more of means for collecting the fuel produced, means for collecting the chemical energy produced and means for collecting chemicals produced.

18. A photoelectrochemical cell according to any preceding claim, wherein the semiconductor material is mixed metal oxide material of the formula, in which r is 0, y is 1 and z is 2 and the final oxide material corresponds to the formula $MO_2$.

19. A photoelectrochemical cell according to any of claims 1 to 17, wherein the semiconductor material is mixed metal oxide material of the formula, in which r is 1, y is 1 and z is 3 and the final oxide material corresponds to the formula $AMO_3$.

20. A photoelectrochemical cell according to any of claims 1 to 17, wherein the semiconductor material is mixed metal oxide material of the formula, in which r is 2, y is 2 and z is 7 and the final oxide material corresponds to the formula $A_2M_2O_7$.

21. A photoelectrochemical cell according to any of claims 1 to 17, wherein the semiconductor material is

mixed metal oxide material of the formula, in which r is 0, y is 2 and z is 3 and the final oxide material corresponds to the formula $M_2O_3$.

22. A photoelectrochemical cell according to any of claims 1 to 17, wherein the semiconductor material is mixed metal oxide material of the formula, in which r is 0, y is 1 and z is 1 and the final oxide material corresponds to the formula MO.

23. A photoelectrochemical cell according to any of claims 1 to 17, 19 and 20, wherein A is a single metal or a combination of 2 or 3 different metals selected from strontium, zinc and the lanthanides.

24. A photoelectrochemical cell according to any preceding claim, wherein M is a combination of two different metals selected from boron, aluminium, tin, lead, the lanthanide series and the transition metals.

25. A photoelectrochemical cell according to claim 24, wherein M is a combination of titanium or aluminium and one of Rh, Ru, Ir, Mn, Cr, Fe, V and Pt.

26. A photoelectrochemical cell according to claim 24, wherein M is a combination of Ru or Rh and one of niobium, lanthanum, tantalum, tin, titanium and zirconium.

27. A photoelectrochemical cell according to any of claims 1 to 23, wherein M is a combination of 3 or 4 different metals, one of which is selected from Al, Nb, La, Ta, Sn, Ti and Zr and the remainder of which are selected from Ir, Mn, Cr, Fe, V, Pt, Rh and Ru.

28. A photoelectrochemical cell according to any preceding claim, wherein the substrate of the second electrode is selected from glass, tetrafluoroethylene (TFE), PVC, CPVC, fluorinated ethylene-propylene resin (FEP), polyvinylidene difluoride (PVDF), poly-(methylmethacrylate)-type polymers, silicones, silicates, transparent inorganic materials, transparent organic materials and combinations

thereof.

29. A photoelectrochemical cell according to any preceding claim, wherein the substrate of the first electrode is selected from valve metals, precious metals, other suitable metals, ceramic material, glass and combinations thereof.

30. A photoelectrochemical cell according to claim 29, wherein the substrate is titanium, zirconium or tin.

31. A photoelectrochemical cell according to any of claims 1 to 28, wherein the first electrode is a bulk electrode comprising photoactive true solid/solid semiconductor mixed metal oxide material.

32. A photoelectrochemical cell according to any of claims 1 to 28, wherein the first electrode is produced using a single layer of the true solid/solid solution metal oxide material.

33. A photoelectrochemical cell according to any of claims 1 to 28, wherein the first electrode is produced using at least two layers of the true solid/solid solution metal oxide material.

34. A photoelectrochemical cell according to claim 2 or 3 or any of claims 4 to 32 as dependent thereon, wherein the thermal transfer medium is a liquid, a gas, a sol or a gel.

35. A photoelectrochemical cell according to claim 34, wherein the thermal transfer medium is air.

36. A photoelectrochemical cell according to claim 34, wherein the thermal transfer medium is a liquid selected from water, ammonia and halogenated hydrocarbons.

37. A photoelectrochemical cell according to claim 2 or 3 or any of claims 4 to 33 as dependent thereon, wherein the means for receiving the thermal energy comprise a thermal transfer system.

38. A photoelectrochemical cell according to

claim 2 or 3 or any of claims 4 to 33 as dependent thereon, wherein the meansfor receiving the thermal energy comprise a thermal storage means.

39. A photoelectrochemical cell according to any preceding claim, wherein the semiconductive layer and the substrate of the second electrode have the same composition.

40. A photoelectrochemical cell, comprising a first electrode, a second electrode and a solid disposed between the electrodes,
characterised in that
the solid comprises an ionomer or polymer solvated with a liquid material which is capable of redox chemistry.

41. A photoelectrochemical cell according to claim 40, wherein the solid comprises a copolymer having recurring structural units of the formula:

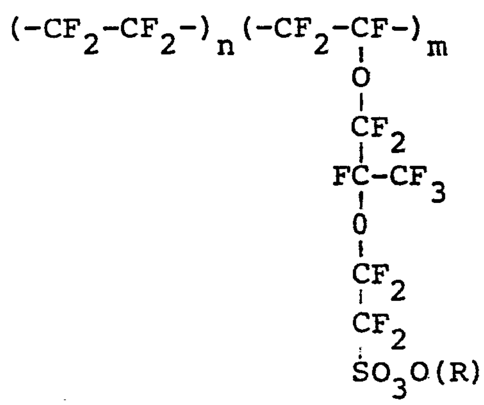

where R = H, Li, K or Na, n = 0 or 1 and m = 1, 2 or 3 and the copolymer has an equivalent weight in the range from 1000 to 4000.

42. A photoelectrochemical cell according to claim 41, wherein the solid comprises the lithium sulphonate form of NAFION having recurring structural units of the formula:

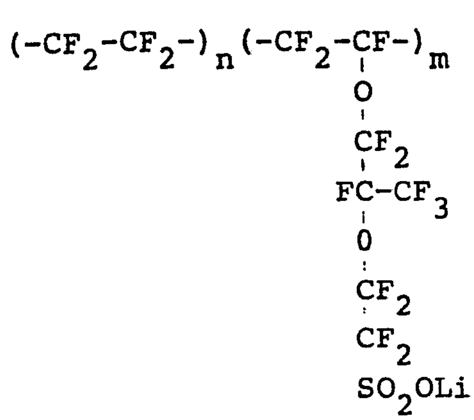

where n = 0 or 1 and m = 1, 2 or 3 and the copolymer has an equivalent weight in the range from 1000 to 4000.

43. A photoelectrochemical cell according to claim 40, wherein the solid comprises a hydrogel.

44. A photoelectrochemical cell according to claim 43, wherein the hydrogel comprises cross-linked poly-(hydroxyethyl methacrylate) (HEMA) of the formula:

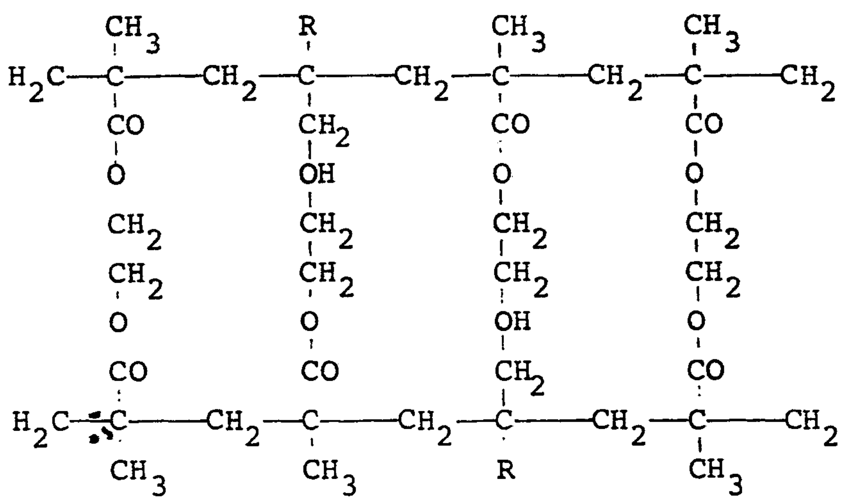

wherein R = $COOCH_2CH_2OH$.

45. A photoelectrochemical cell according to any of claims 40 to 44, wherein the first electrode is a chalcogenide and the second electrode is a metal.

46. A photoelectrochemical cell according to any of claims 4o to 44, wherein the first electrode is a chalcogenide and the second electrode is carbon or graphite.

47. A photoelectrochemical cell according to any of claims 40 to 44, wherein the first electrode is a

chalcogenide and the second electrode is a semiconductive material of opposite conductivity type.

48. A photoelectrochemical cell according to claim 47, wherein the first and second electrodes are chalcogenides of opposite conductivity types.

49. A photoelectrochemical cell according to any of claims 40 to 44, wherein the second electrode is a transparent semiconductive material of one conductivity type and the first electrode is a true solid/solid solution mixed metal oxide semiconductive material of the opposite conductivity type.

50. A photoelectrochemical cell according to any of claims 40 to 49, wherein the liquid material is an aqueous solution of an alkali halide or alkali hydroxide.

51. A photoelectrochemical cell according to claim 50, wherein the liquid material is an aqueous solution of sodium hydroxide, potassium hydroxide or lithium hydroxide.

52. A photoelectrochemical cell according to any of claims 40 to 49, wherein the liquid material is an aqueous solution of a polysulphide or polyselenide.

53. A photoelectrochemical cell according to any of claims 40 to 49, wherein the liquid material is an aqueous solution of sulphuric acid.

54. A process of forming a photoelectrochemical cell,

characterised in that

an ionomer or polymer is solvated with a liquid material and the solvated solid electrolyte thus obtained is then disposed between first and second electrodes, at least one of which is a photoactive semiconductor.

55. A process of forming a photoelectrochemical cell,

characterised in that

a first electrode is disposed in interfacial contact with

a film of ionomer or polymer, the film is solvated with a liquid material and a second electrode is disposed in intimate interfacial contact with the film so that opposing surfaces of the first and second electrodes are separated by the film.

56. A process according to claim 55, wherein the film is formed by casting.

57. A process according to claim 55, wherein the film is formed by polymerization.

58. A film electrode comprising a substrate, an electrical connector and a film layer comprising a semiconductor material,

characterised in that

the semiconductor material is a photoactive true solid/solid solution mixed metal oxide material containing metal components all derived from precursor substances selected from elemental metals, non-oxide metal compounds and mixtures thereof;

that the mixed metal oxide material corresponds to the formula $A_r^{va}M_y^{vm}O_z^{-2}$ representing the stoichiometry of the basic repeating unit lattice cell, wherein M is the combination of a component (a) metal and a component (b) metal, A, when present, is at least one different metal which does not substantially alter the optical absorption accruing from the metals constituting M, O represents oxygen, r, y, va and vm are defined by the relationship $va(r) + vm(y) = 2z$, wherein r is from 0 to 2 inclusive, y is from 1 to 2 inclusive, z is from 1 to 7 inclusive, va is the positive valence of A and vm is the positive mean valence of M;

that all the metals in the mixed metal oxide material are selected from boron, aluminium, tin, lead, transition metals of groups 1b to 7b inclusive and group 8 of the Periodic Table of Elements and metals of the lanthanide series; and

that M comprises:

(a) 50 to 99.9 mole percent, based on the total metal mole fraction, of one or more component (a) metals; and

(b) 0.1 to 50 mole percent, based on the total metal mole fraction, of one or more component (b) metals,

with the provisos that (i) the component (b) metals are different from the component (a) metals and (ii) that the component (a) metals, when in comparable oxide form, have a larger band gap than the component (b) metals, when in comparable oxide form.

59. A film electrode according to claim 58, wherein the film layer has a band gap of approximately 1.4 eV corresponding to an electromagnetic energy absorption edge of approximately 800 nanometres.

60. A film electrode according to claim 58 or 59, wherein the film layer is deposited upon the substrate by dipping, painting, flame-spraying, plasma-spraying, electrochemical deposition, sputtering, evaporation and/or chemical vapour deposition.

61. A film electrode according to any of claims 58 to 60, wherein the film layer has a thickness in the range from 100 angstroms ($10^{-5}$mm) to 500 μm.

62. A film electrode according to any of claims 58 to 61, which has been subjected to one or more pre-deposition treatments, one or more post-deposition treatments or combinations thereof.

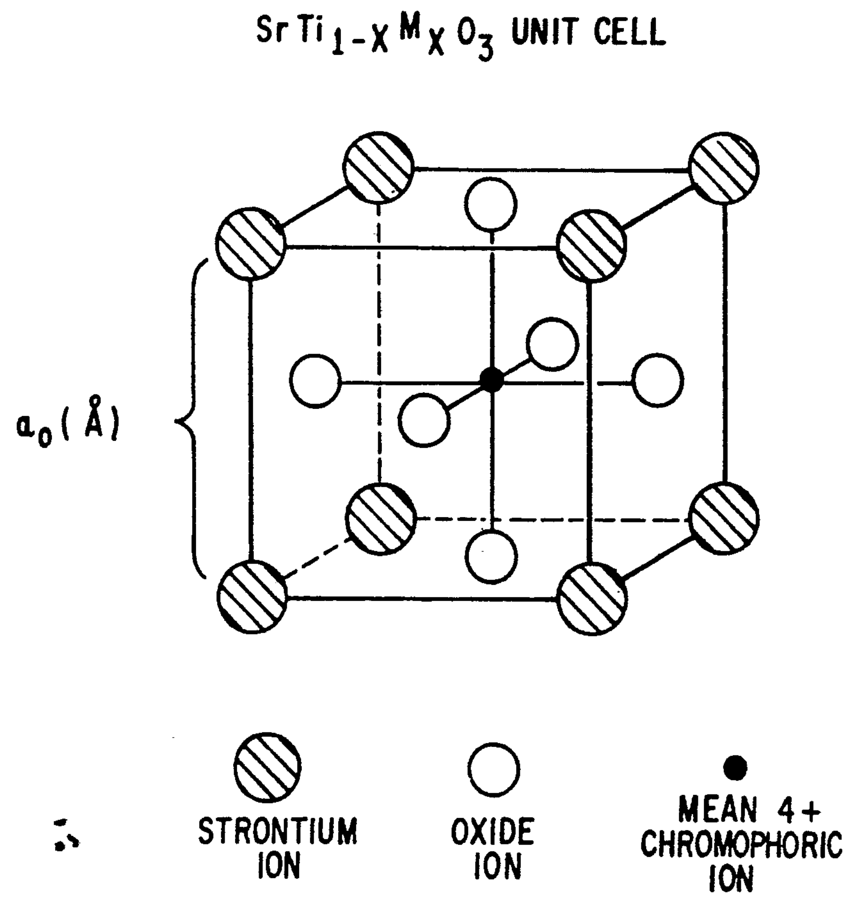
SrTi$_{1-X}$M$_X$O$_3$ UNIT CELL
a$_0$(Å)
STRONTIUM ION
OXIDE ION
MEAN 4+ CHROMOPHORIC ION

FIG. 1

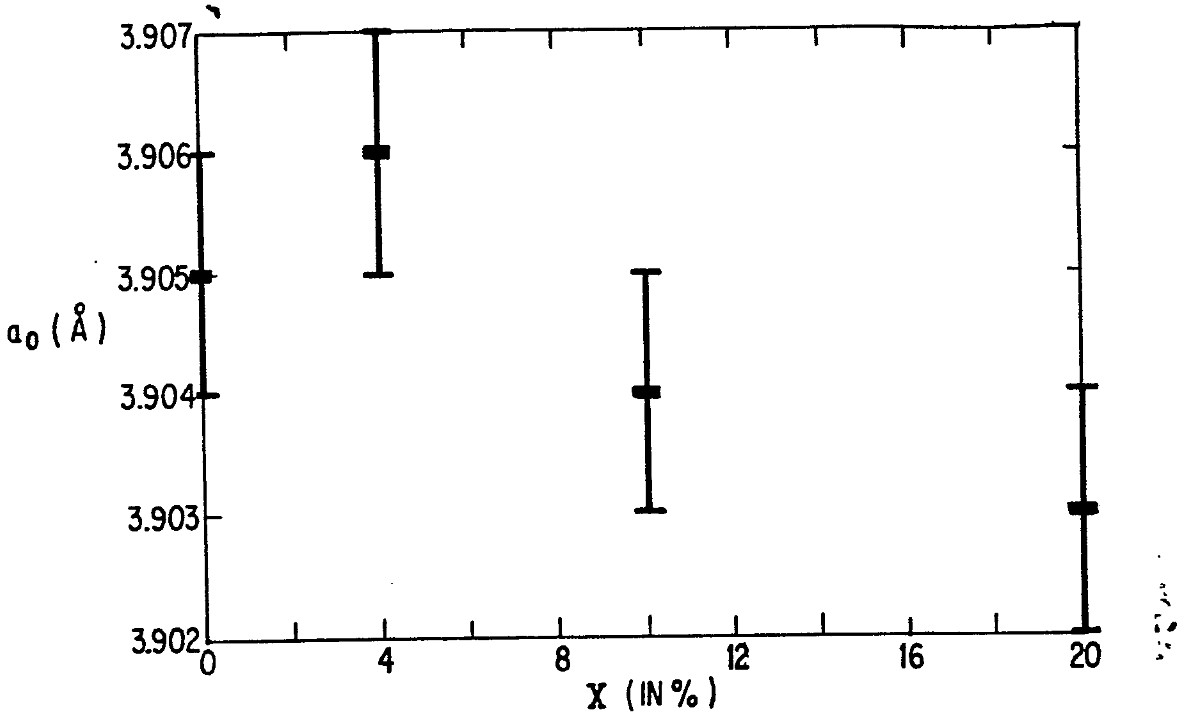
3.907
3.906
3.905
3.904
3.903
3.902
$a_0$ (Å)
0
4
8
12
16
20
X (IN %)

FIG. 2

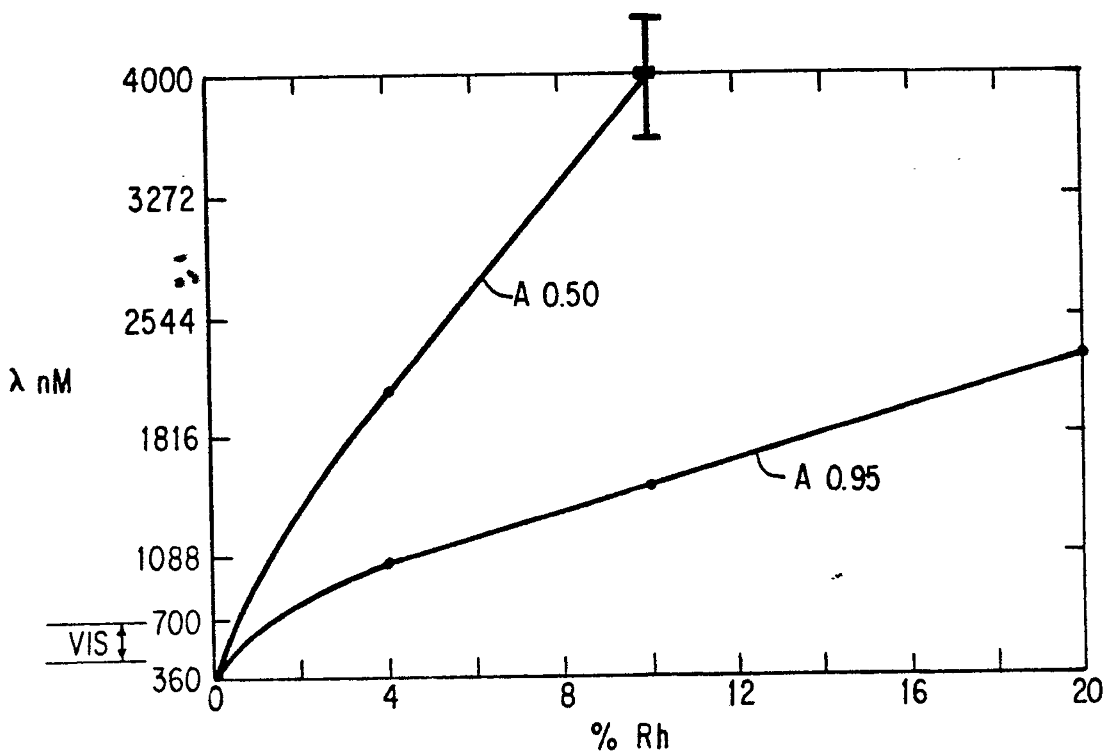
4000
3272
2544
1816
1088
700
360
λ nM
VIS
A 0.50
A 0.95
0
4
8
12
16
20
% Rh

FIG. 3

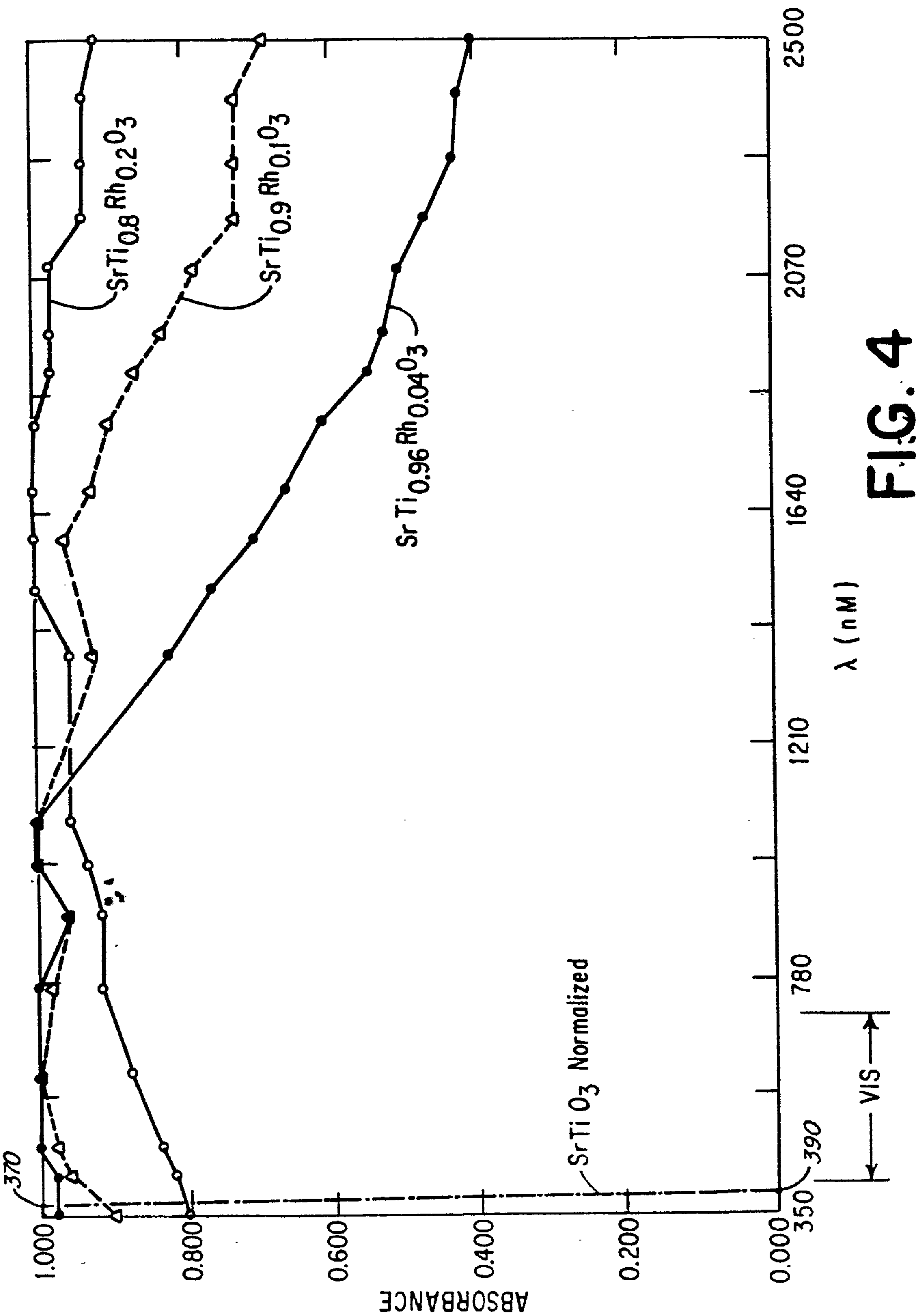
ABSORBANCE
1.000
0.800
0.600
0.400
0.200
0.000
350
390
780
1210
1640
2070
2500
λ (nM)
VIS
370
390
SrTiO3 Normalized
SrTi0.8Rh0.2O3
SrTi0.9Rh0.1O3
SrTi0.96Rh0.04O3

FIG. 4

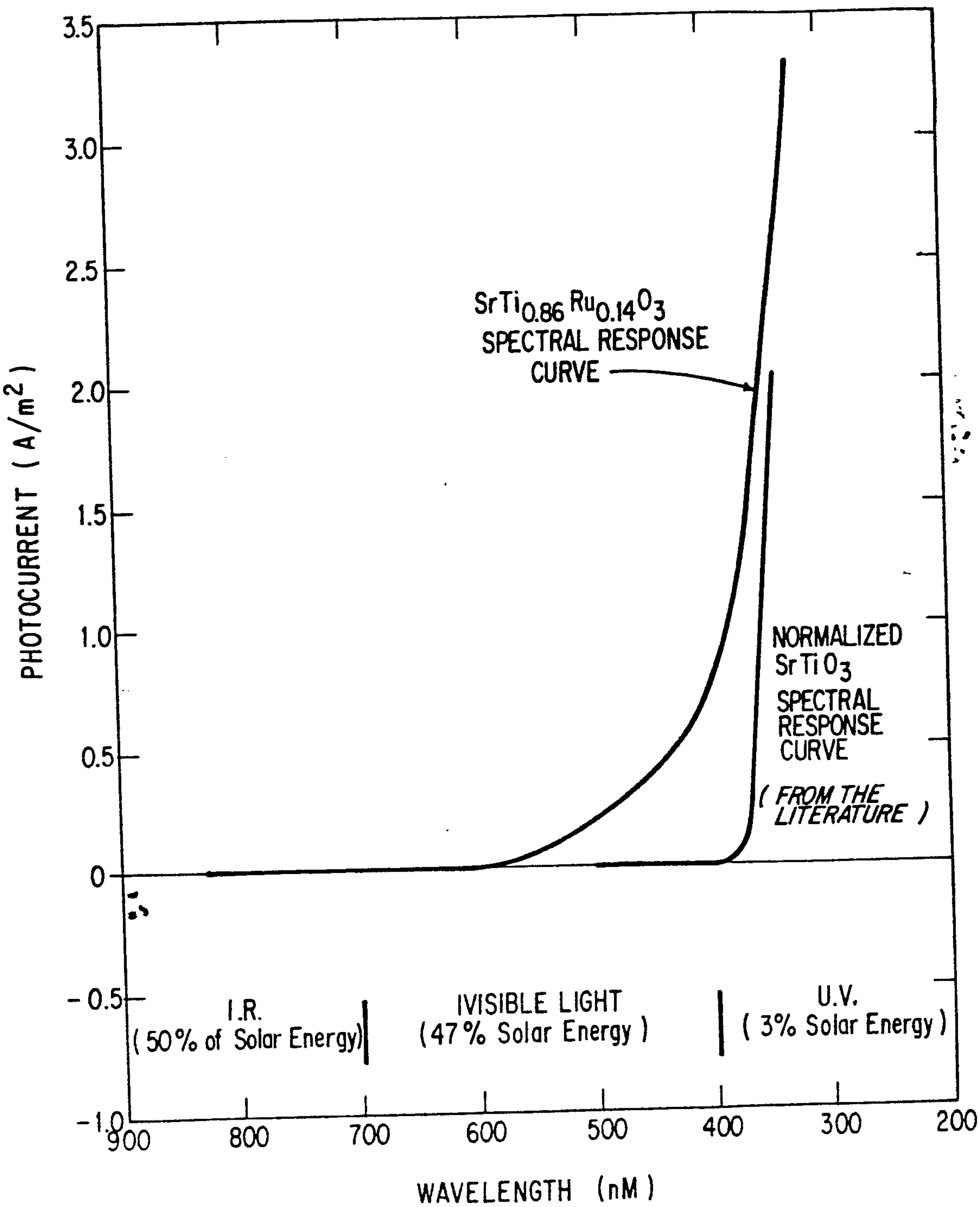
PHOTOCURRENT ( A/m^2 )
3.5
3.0
2.5
2.0
1.5
1.0
0.5
0
-0.5
-1.0
SrTi0.86 Ru0.14O3 SPECTRAL RESPONSE CURVE
NORMALIZED SrTiO3 SPECTRAL RESPONSE CURVE
( FROM THE LITERATURE )
I.R. ( 50% of Solar Energy)
VISIBLE LIGHT (47% Solar Energy )
U.V. ( 3% Solar Energy )
900
800
700
600
500
400
300
200
WAVELENGTH (nM)

FIG. 5

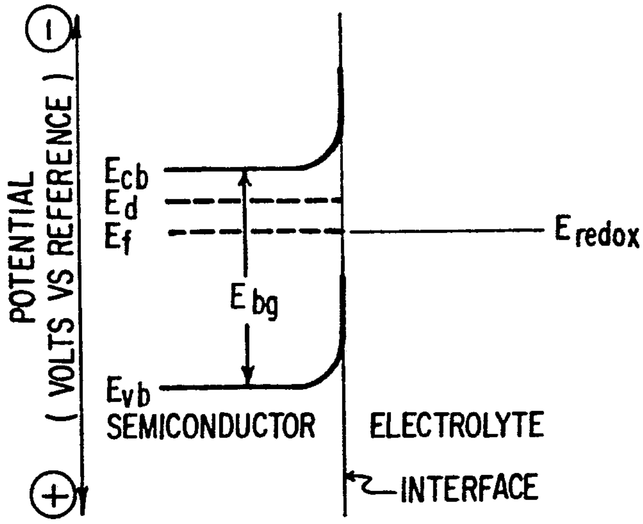
POTENTIAL
( VOLTS VS REFERENCE )
−
+
Ecb
Ed
Ef
Ebg
Evb
Eredox
SEMICONDUCTOR
ELECTROLYTE
INTERFACE

FIG. 6

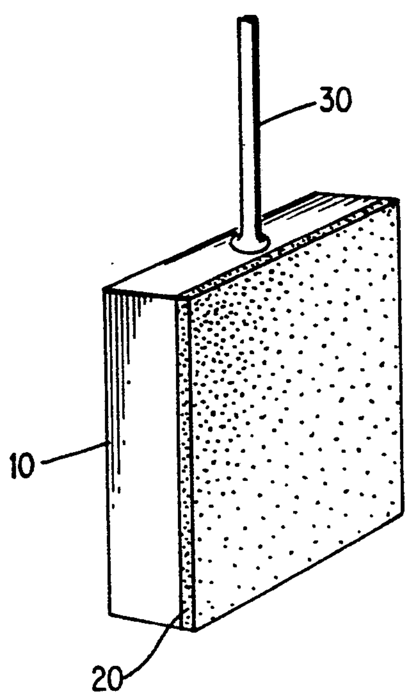
30
10
20

FIG. 7

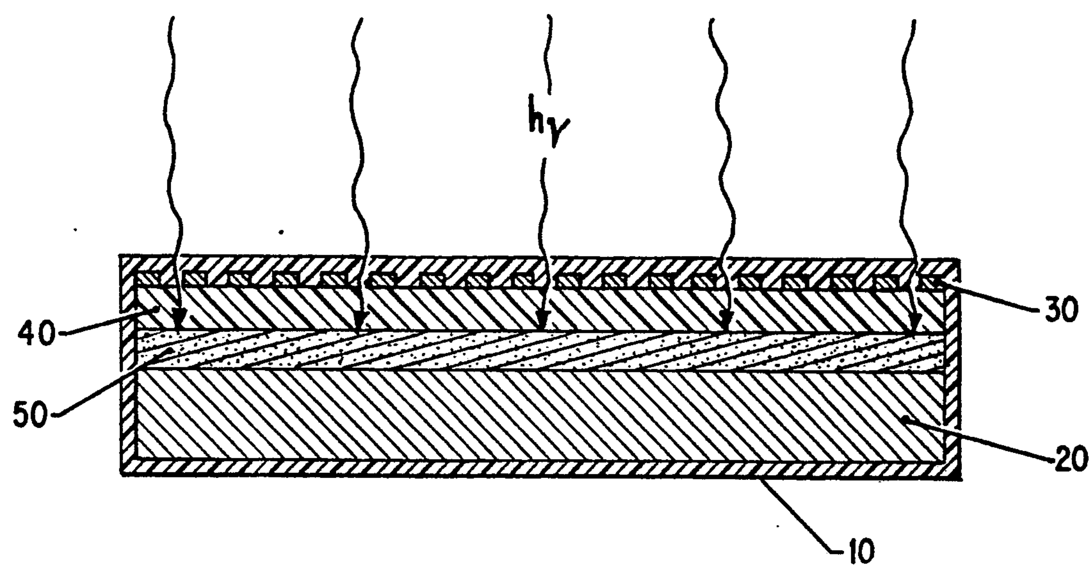


FIG. 8

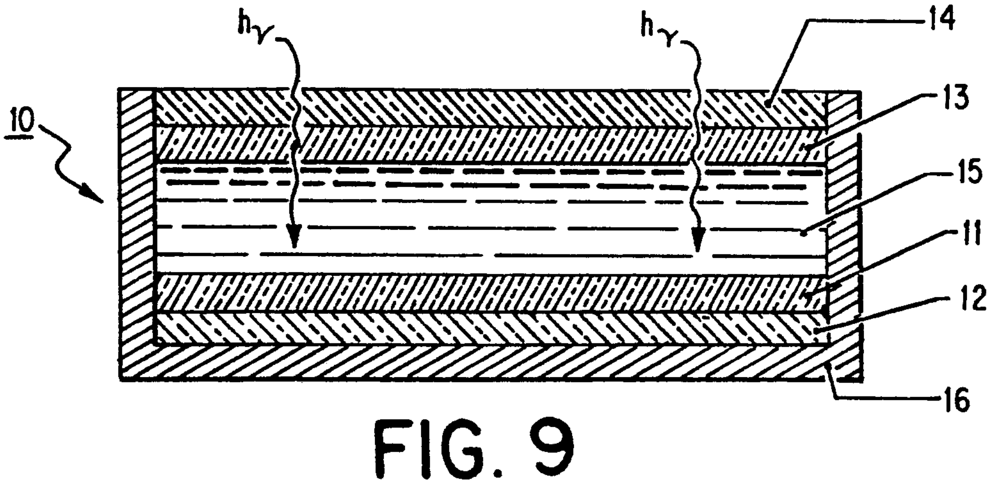


FIG. 9

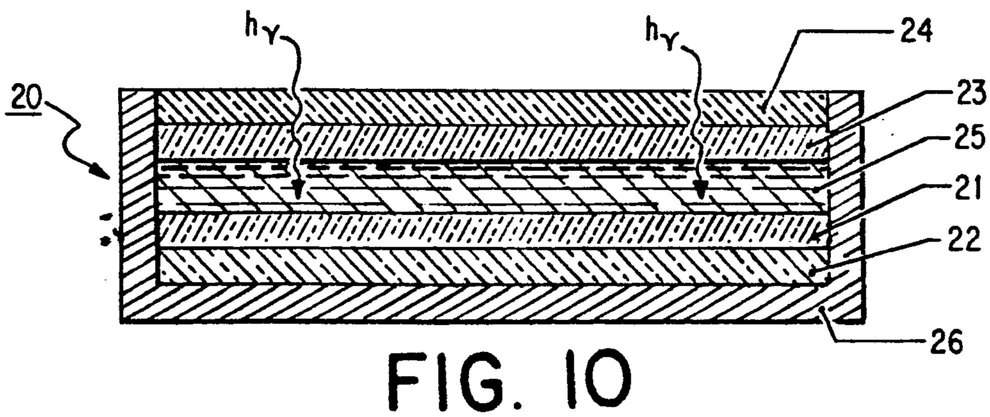


FIG. 10

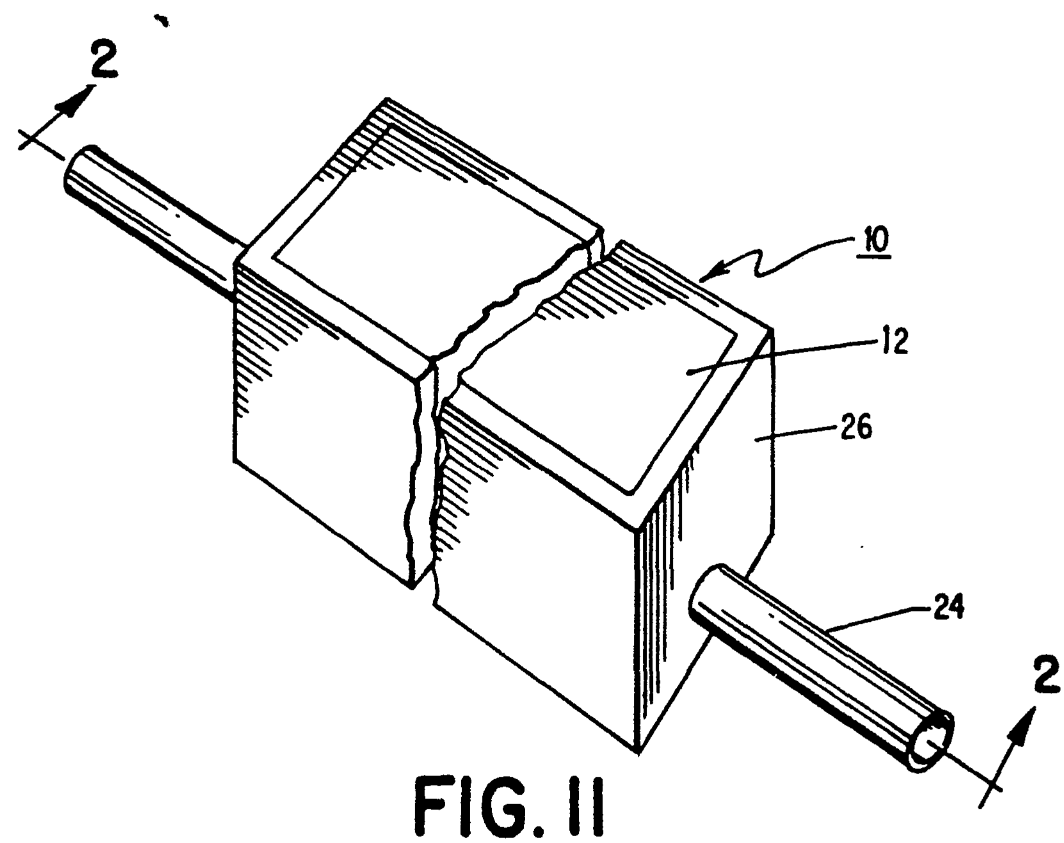


FIG. 11

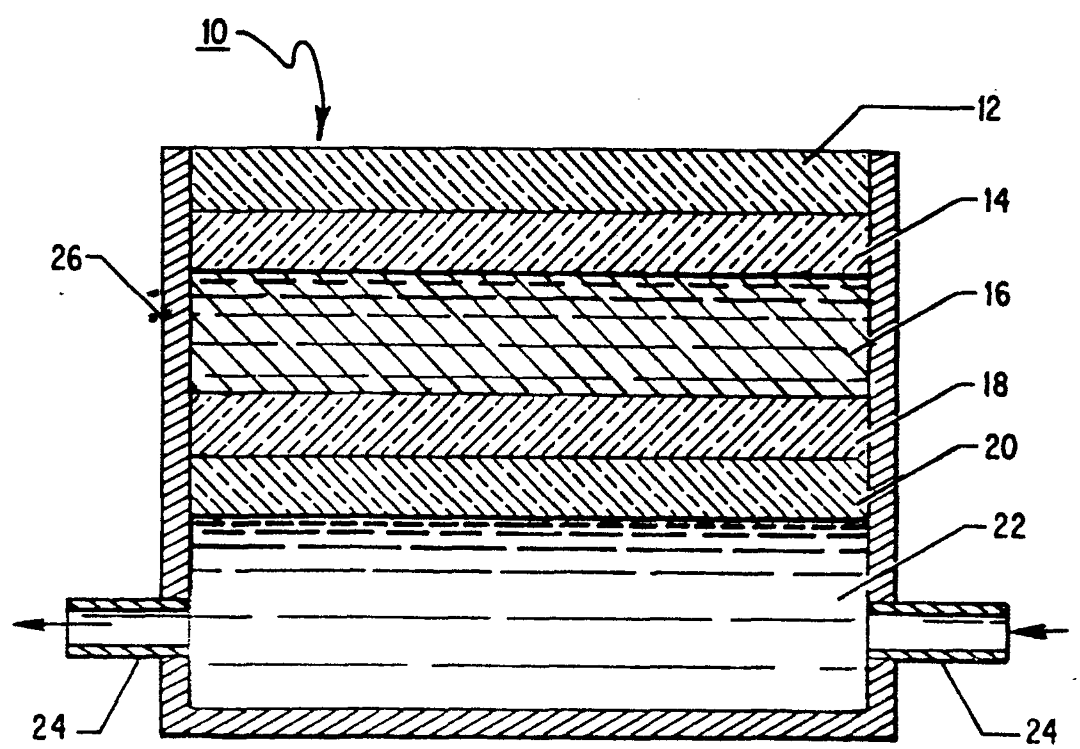


FIG. 12

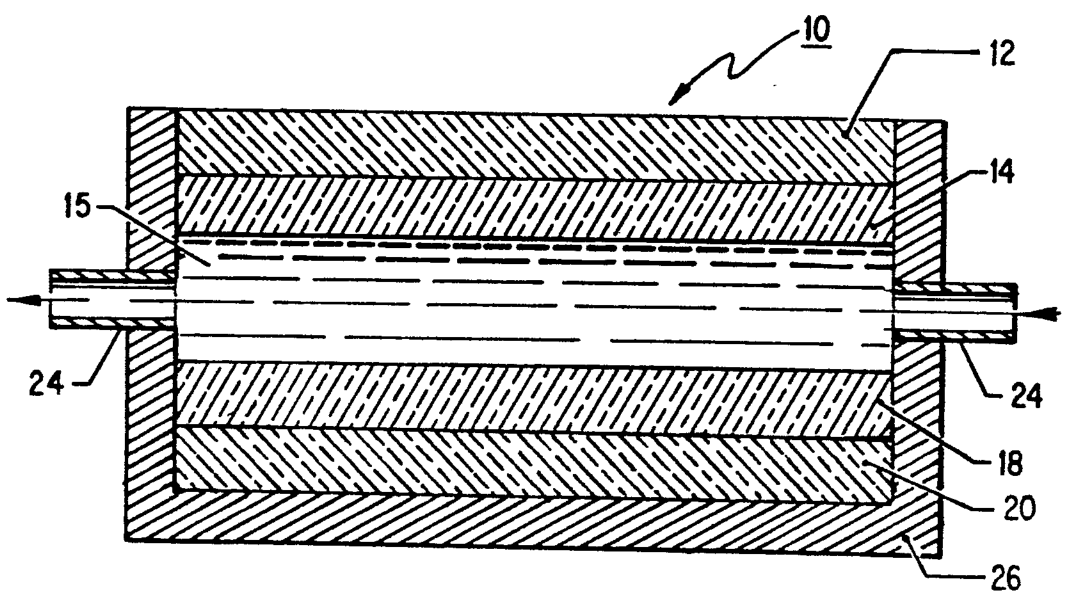


FIG. 13